# EUROPEAN PATENT SPECIFICATION

(11) **EP 2 806 177 B1**
(45) Date of publication and mention of the grant of the patent: **01.08.2018**
(21) Application number: 13738142.2
(22) Date of filing: 10.01.2013
(51) Int. Cl.: F16C 17/18, F16C 33/20, F16C 33/10, F16C 17/04, B60G 15/06

(54) **THRUST SLIDING BEARING**
SCHUBGLEITLAGER
PALIER DE BUTÉE À GLISSIÈRE

(30) Priority: 17.01.2012 JP 2012007374
(43) Date of publication of application: 26.11.2014
(73) Proprietor: Oiles Corporation, Tokyo 108-0075 (JP)
(72) Inventor: SAITO, Katsunori, Fujisawa-shi Kanagawa 252-0811 (JP); MORISHIGE, Kouichi, Fujisawa-shi Kanagawa 252-0811 (JP); NAGASHIMA, Tsuyoshi, Fujisawa-shi Kanagawa 252-0811 (JP)
(74) Representative: J A Kemp
(86) International application number: PCT/JP2013/000056
(87) International publication number: WO 2013/108596

(56) References cited:
- JP-A- H 074 435
- JP-A- 2009 257 516
- JP-A- 2011 122 695
- JP-A- 2011 169 469
- JP-U- H01 141 926

## Description

### TECHNICAL FIELD

The present invention relates particularly to a thrust sliding bearing, and more particularly to a synthetic resin-made sliding bearing which is suitably incorporated as a sliding bearing of a strut-type suspension (Macpherson type) in a four-wheeled motor vehicle.

### BACKGROUND ART

In general, a strut-type suspension is mainly used in a front wheel of a four-wheeled motor vehicle, and is constructed such that a strut assembly incorporating a hydraulic shock absorber in an outer cylinder formed integrally with a main shaft is combined with a suspension coil spring. Among such suspensions, there is a type of structure in which the axis of the coil spring is actively offset with respect to the axis of that strut, so as to allow the sliding of a piston rod of the shock absorber incorporated in the strut to be effected smoothly, and there is another type of structure in which the coil spring is disposed by aligning the axis of the coil spring with the axis of the strut. In either structure, a thrust bearing is disposed between a mounting member for a motor vehicle body and an upper spring seat of the coil spring to allow the rotation to be effected smoothly when the strut assembly rotates together with the coil spring by the steering operation.

### PRIOR ART DOCUMENTS

### PATENT DOCUMENTS

[Patent Document 1] JP-UM-B-4-52488
[Patent Document 2] JP-UM-B-2-1532
[Patent Document 3] JP-UM-B-2-6263
[Patent Document 4] JP-UM-B-8-2500
[Patent Document 5] JP-UM-B-4-47445

In this thrust bearing, a thrust rolling bearing using balls or needles or a synthetic resin-made thrust sliding bearing is used. However, the thrust rolling bearing has a possibility of causing a fatigue failure in the balls or needles owing to such as infinitesimal oscillations and a vibratory load, so that there is a problem in that it is difficult to maintain a smooth steering operation. As compared with the thrust rolling bearing, the synthetic resin-made thrust sliding bearing has a high frictional torque and therefore has the problem that the steering operation is made heavy. Furthermore, both thrust bearings have the problem that the steering operation is made heavy due to the high sliding frictional force of a dust seal formed of a rubber elastomer fitted to prevent the ingress of foreign objects such as dust onto sliding surfaces, and the synthetic resin-made thrust sliding bearing in particular has the problem that the steering operation is made much heavier.

To overcome the above-described problems, the present applicant proposed synthetic resin-made thrust sliding bearings which are each comprised of a synthetic resin-made upper casing, a synthetic resin-made lower casing, and a synthetic resin-made sliding bearing piece interposed between the upper and lower casings, wherein the upper and lower casings are combined by elastic fitting, and a resiliently fitting portion and a sealing portion based on labyrinth action are respectively formed between the upper and lower casings and between an inner peripheral surface side and an outer peripheral surface side, to prevent the entry of foreign objects such as dust onto the bearing sliding surfaces by means of that sealing portion (described in Patent Document 1, Patent Document 2, Patent Document 3, Patent Document 4, and Patent Document 5).

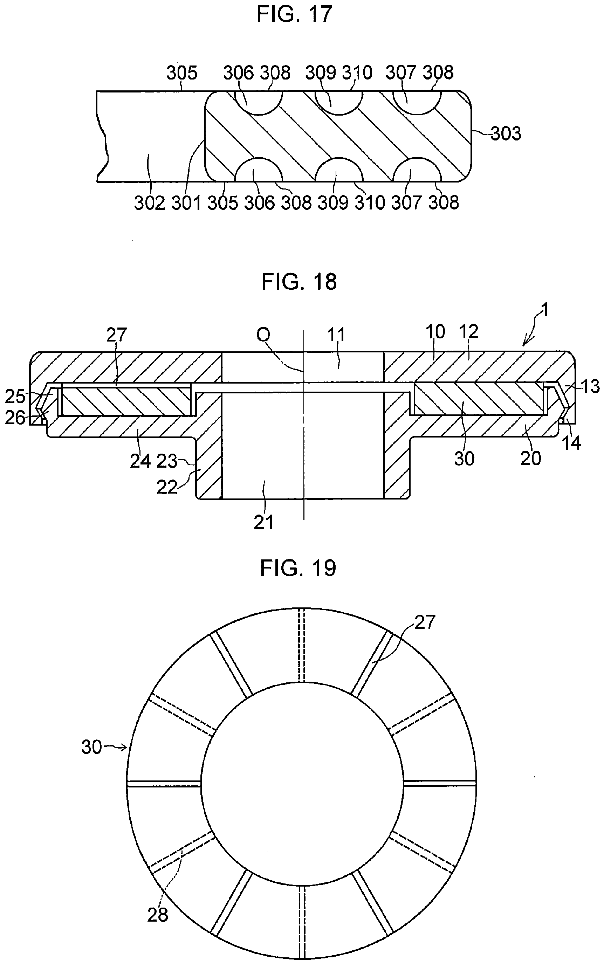

This thrust sliding bearing will be described with reference to drawings as follows. In Figs. 18 and 19, a synthetic resin-made thrust sliding bearing 1 is comprised of a synthetic resin-made upper casing 10, a synthetic resin-made lower casing 20, and a synthetic resin-made thrust sliding bearing piece 30 interposed between the upper casing 10 and the lower casing 20. The upper casing 10 includes an upper disk-like planar portion 12 having a circular hole 11 in a central portion thereof, a cylindrical engaging suspended portion 13 formed integrally at an outer peripheral edge of the upper disk-like planar portion 12, and an engaging hook portion 14 formed on an inner peripheral surface of an end portion of the cylindrical engaging suspended portion 13. Meanwhile, the lower casing 20 includes a cylindrical portion 22 having an inner peripheral surface defining an insertion hole 21, an annular wide collar portion 24 formed integrally on an outer peripheral surface 23 of the cylindrical portion 22 in such a manner as to project radially outwardly from that outer surface 23, a cylindrical engaging projecting portion 25 formed integrally at an outer peripheral edge of the annular wide collar portion 24, and an engaging portion 26 formed on an outer peripheral surface of a lower end of the cylindrical engaging projecting portion 25. The upper casing 10 is combined with the lower casing 20 by causing the engaging hook portion 14 to be resiliently fitted to the engaging portion 26 of the lower casing 20. As for the thrust sliding bearing piece 30, pluralities of grooves 27 and 28 are respectively formed radially on an upper surface and a lower surface of the thrust sliding bearing piece 30 with a phase difference of 30° in the circumferential direction, and these grooves 27 and 28 serve as a sump section for lubricating oil such as grease.

### SUMMARY OF THE INVENTION

### PROBLEMS THAT THE INVENTION IS TO SOLVE

With the above-described thrust sliding bearings, it is possible to overcome the problem of an increase in the frictional resistance force due to the dust seal which is formed of a rubber elastomer and fitted between the sliding surfaces in such a manner as to surround the sliding surfaces, and it is possible to effect stable and smooth steering operation by preventing as practically as possible the entry of foreign objects such as dust onto the sliding surfaces.

The above-described thrust sliding bearings exhibit low frictional properties by the combination of the reduction of friction by virtue of the sliding among synthetic resins including the synthetic resin-made upper casing, the synthetic resin-made lower casing, and the synthetic resin-made thrust sliding bearing piece interposed between the upper casing and the lower casing and the reduction of friction by virtue of the lubricating oil such as grease filled in the pluralities of grooves formed on the upper surface and the lower surface of the thrust sliding bearing piece. In recent years, however, there has been a demand for the reduction of the steering operating force through further lower frictional properties of the sliding bearing.

JP 2011-169469 discloses a thrust sliding bearing according to the pre-characterizing section of claim 1.

As a result of conducting strenuous studies in order to satisfy the above-described demand, the present inventors found that further lower frictional properties can be exhibited by changing profiles of the grooves which are formed on the upper surface and the lower surface of the thrust sliding bearing piece interposed between the upper casing and the lower casing and serve as a sump section for lubricating oil such as grease.

The present invention has been devised on the basis of the above-described finding, and its object is to provide a synthetic resin-made thrust sliding bearing which exhibits further lower frictional properties.

### MEANS FOR OVERCOMING THE PROBLEMS

A thrust sliding bearing in accordance with the present invention is comprises: a synthetic resin-made upper casing having an upper annular planar portion; a synthetic resin-made lower casing which is superposed on the upper casing so as to be rotatable about an axis of the upper casing and has a lower annular planar portion opposing the upper annular planar portion of the upper casing, a first and a second annular protrusion formed on the lower annular planar portion concentrically with each other, and a wide lower annular recess surrounded by the first and the second annular protrusion; and a synthetic resin-made thrust sliding bearing piece disposed in the lower annular recess of the lower casing and having an annular thrust sliding bearing surface which is brought into sliding contact with at least one of the upper annular planar portion and the lower annular planar portion characterized in that, said thrust sliding bearing piece has at least two annular recessed grooves which are formed on the thrust sliding bearing surface concentrically with each other and a lubricating oil filled in the annular recessed grooves, and a ratio of a total area of opening surfaces of the at least two annular recessed grooves in surfaces combining an opening surfaces of the at least two annular recessed grooves and the thrust sliding bearing surface is 20 to 50%.

According to the thrust sliding bearing in accordance with the present invention, since at least two annular recessed grooves which are arranged concentrically with each other are formed on the thrust sliding bearing surface of the synthetic resin-made thrust sliding bearing piece which is disposed in the lower annular recess of the lower casing, the lubricating oil such as grease filled in the annular recessed grooves is constantly fed to the thrust sliding bearing surface, i.e., the sliding surface, during the relative rotation of at least one of the upper casing and the lower casing and the thrust sliding bearing piece. In consequence, since the lubricating oil is constantly present at the thrust sliding bearing surface during the relative rotation, further lower frictional properties are exhibited at the thrust sliding bearing surface by virtue of this lubricant.

In order to allow the low frictional properties of the lubricating oil to be exhibited satisfactorily in the plurality of annular recessed grooves for holding the lubricating oil such as grease, it is preferable that the ratio of the total area of opening surfaces of the at least two annular recessed grooves in surfaces combining the opening surfaces of the at least two annular recessed grooves and the thrust sliding bearing surface is at least 20%. If the ratio exceeds 50%, a decline in the strength of the thrust sliding bearing piece results, and plastic deformation such as creep is likely to occur. In allowing the low frictional properties of the lubricating oil to be exhibited more satisfactorily, the ratio may be 30 to 40% in order to ensure the strength of the thrust sliding bearing piece.

In a preferred embodiment, the upper annular planar portion has a circular hole in a central portion thereof, the lower annular planar portion has in a central portion thereof an insertion hole concentric with the circular hole of the upper annular planar portion; the upper casing has a cylindrical engaging suspended portion formed integrally on an outer peripheral edge of an annular lower surface of the upper annular planar portion and an annular engaging portion formed on an inner peripheral surface of the cylindrical engaging suspended portion; the first annular protrusion is integrally formed on an annular upper surface of the lower annular planar portion, while the second annular protrusion is integrally formed on an outer peripheral edge of the annular upper surface of the lower annular planar portion in such a manner as to be radially outwardly spaced apart a predetermined interval from the first annular protrusion; the lower annular recess is defined by an outer peripheral surface of the first annular protrusion, an inner peripheral surface of the second annular protrusion, and the annular upper surface of the lower annular planar portion; and the lower casing further has an annular engaging portion formed on an outer peripheral surface of the second annular protrusion, and the upper casing is combined with the lower casing by causing the annular engaging portion thereof to be resiliently fitted to the annular engaging portion of the lower casing.

According to the above-described embodiment, since the upper casing and the lower casing are combined with each other by causing the annular engaging portion of the upper casing to be resiliently fitted to the annular engaging portion of the lower casing, the assembly operation thereof can be performed very simply.

In another preferred embodiment of the thrust sliding bearing in accordance with the present invention, the upper casing further includes a first cylindrical suspended portion formed integrally on the annular lower surface of the upper annular planar portion in such a manner as to be radially outwardly spaced apart a predetermined interval from a peripheral edge of the circular hole in the central portion of the upper annular planar portion and to be radially inwardly spaced apart a predetermined interval from the inner peripheral surface of the cylindrical engaging suspended portion, so as to form at an outer peripheral surface of the first cylindrical suspended portion an upper outer annular groove in cooperation with the inner peripheral surface of the cylindrical engaging suspended portion; the lower casing further includes a third annular protrusion formed integrally on the annular upper surface of the lower annular planar portion in such a manner as to be radially outwardly spaced apart a predetermined interval from the outer peripheral surface of the first annular protrusion, so as to form at an outer peripheral surface of the third annular protrusion a lower outer annular groove in cooperation with an inner peripheral surface of the second annular protrusion; and the upper casing is combined with the lower casing such that the second annular protrusion is disposed in the upper outer annular groove by causing the upper end face of the second annular protrusion to oppose the annular lower surface of the upper annular planar portion with a predetermined interval therebetween, while the first cylindrical suspended portion is disposed in the lower outer annular groove so as to radially overlap with the second annular protrusion and the third annular protrusion.

According to the above-described thrust sliding bearing, since the upper casing is combined with the lower casing by resiliently fitting the annular engaging portions such that the second annular protrusion is disposed in the upper outer annular groove, and the first cylindrical suspended portion is disposed in the lower outer annular groove so as to radially overlap with the second and third annular protrusions, sealed portions based on labyrinth action are formed at radially overlapping portions of the first cylindrical suspended portion and the second and third annular protrusions and at resiliently fitting portions of the engaging portions, thereby further preventing the entry of foreign objects such as dust onto the thrust sliding bearing surface between the upper and lower casings.

In still another preferred embodiment of the thrust sliding bearing in accordance with the present invention, the upper casing further includes a second cylindrical suspended portion formed integrally on the annular lower surface of the upper annular planar portion in such a manner as to be radially inwardly spaced apart a predetermined interval from an inner peripheral surface of the first cylindrical suspended portion, so as to form a wide upper annular recess in cooperation with the inner peripheral surface and the annular lower surface of the upper annular planar portion, the first annular protrusion being radially outwardly adjacent to the insertion hole with a predetermined interval therebetween, the upper casing being combined with the lower casing such that a lower end face of the second cylindrical suspended portion opposes the annular upper surface of the lower annular planar portion with a predetermined interval therebetween, and such that the second cylindrical suspended portion radially overlaps with the first annular protrusion.

According to the above-described thrust sliding bearing, since the upper casing is combined with the lower casing by causing the annular engaging portions to be resiliently fitted to each other such that the second cylindrical suspended portion radially overlaps with the first annular protrusion of the lower casing, and such that the first cylindrical suspended portion disposed in the lower outer annular groove radially overlaps with the second and third annular protrusions, sealed portions based on labyrinth action are formed at overlapping portions of the second cylindrical suspended portion and the first annular protrusion, at overlapping portions of the first cylindrical suspended portion and the second and third annular protrusions, and at resiliently fitting portions of the engaging portions, thereby further preventing the entry of foreign objects such as dust onto the thrust sliding bearing surface between the upper and lower casings.

In the thrust sliding bearing in accordance with the present invention, the second cylindrical suspended portion may have an inner peripheral surface with a diameter identical to that of the circular hole in the central portion of the upper annular planar portion. Alternatively, the second cylindrical suspended portion may be radially outwardly adjacent to the circular hole in the central portion of the upper annular planar portion with a predetermined interval therebetween, in which case the lower casing may further include a fourth annular protrusion which is integrally formed on the upper surface of the lower annular planar portion in such a manner as to be radially inwardly spaced apart a predetermined interval from the first annular protrusion, so as to form at an outer peripheral surface thereof a lower inner annular groove in cooperation with the inner peripheral surface of the first annular protrusion, and the upper casing may be combined with the lower casing such that the lower end face of the second cylindrical suspended portion opposes the annular upper surface of the lower annular planar portion with a predetermined interval therebetween, and the second cylindrical suspended portion is disposed in the lower inner annular groove so as to radially overlap with the first annular protrusion and the fourth annular protrusion.

According to the above-described thrust sliding bearing in accordance with the present invention, since the upper casing is combined with the lower casing such that the second cylindrical suspended portion is disposed in the lower inner annular groove to radially overlap with the first annular protrusion and the fourth annular protrusion, sealed portions based on labyrinth action are further formed at radially overlapping portions of the second cylindrical suspended portion and the first and fourth annular protrusions, with the result that the entry of foreign objects such as dust between the upper casing and the lower casing, particularly from the inner peripheral surface side, onto the thrust sliding bearing surface is further prevented.

In the thrust sliding bearing in accordance with the present invention, the fourth annular protrusion may have an inner peripheral surface with a diameter identical to that of the insertion hole formed in the central portion of the lower annular planar portion. Alternatively, the fourth annular protrusion may be integrally formed on the upper surface of the lower annular planar portion in such a manner as to be radially outwardly spaced apart a predetermined interval from the insertion hole in the central portion of the lower annular planar portion. In this case, the upper casing may further include a third cylindrical suspended portion which is integrally formed on the annular lower surface of the upper annular planar portion and has an inner peripheral surface with a diameter identical to that of the circular hole in the central portion of the upper annular planar portion so as to form at an outer peripheral surface thereof an upper inner annular groove in cooperation with an inner peripheral surface of the second cylindrical suspended portion, and the upper casing may be combined with the lower casing such that a lower end face of the third cylindrical suspended portion opposes the annular upper surface of the lower annular planar portion with a predetermined interval therebetween, and the third cylindrical suspended portion radially overlaps with the fourth annular protrusion, and such that an upper end face of the fourth annular protrusion opposes the annular lower surface of the upper annular planar portion with a predetermined interval therebetween, and the fourth annular protrusion is disposed in the upper inner annular groove to cause the fourth annular protrusion to radially overlap with the second cylindrical suspended portion and the third cylindrical suspended portion.

According to the above-described thrust sliding bearing in accordance with the present invention, since the upper casing is combined with the lower casing such that the third cylindrical suspended portion radially overlaps with the fourth annular protrusion, the fourth annular protrusion is disposed in the upper inner annular groove, and the second cylindrical suspended portion is disposed in the lower inner annular groove so as to radially overlap with the first and fourth annular protrusions, sealed portions based on labyrinth action are formed at radially overlapping portions of the second and third cylindrical suspended portions and the first and fourth annular protrusions, with the result that the entry of foreign objects such as dust between the upper casing and the lower casing, particularly from the inner peripheral surface side, onto the thrust sliding bearing surface is further prevented.

In the present invention, the lower casing may further include a hollow cylindrical portion which is integrally formed on the annular lower surface of the lower annular planar portion and has an inner peripheral surface with a diameter identical to the insertion hole in the central portion.

According to the thrust sliding bearing having the hollow cylindrical portion which is integrally formed on the annular lower surface of the lower annular planar portion of the lower casing and has an inside diameter identical to the insertion hole, the mounting operation can be performed very easily by inserting the hollow cylindrical portion into a mounting hole formed in a mounting member for mounting the thrust sliding bearing.

In the thrust sliding bearing in accordance with the present invention, the upper casing may further include a hollow cylindrical portion which is integrally formed on the annular lower surface of the upper annular planar portion and has an inner peripheral surface with a diameter identical to the circular hole in the central portion of the upper annular planar portion, the lower casing may further include a hollow cylindrical portion which is integrally formed on the annular lower surface of the lower annular planar portion and has an inner peripheral surface with a diameter identical to the insertion hole, and the upper casing may be combined with the lower casing such that an outer peripheral surface of the hollow cylindrical portion is brought into sliding contact with the inner peripheral surface of the hollow cylindrical portion of the lower casing.

According to the above-described thrust sliding bearing in accordance with the present invention, in allowing smooth sliding under a thrust load, the sliding under a radial load can be smoothly allowed by the sliding of the synthetic resins in the radial bearing portion formed between the outer peripheral surface of the hollow cylindrical portion of the upper casing and the inner peripheral surface of the hollow cylindrical portion of the lower casing.

In the thrust sliding bearing in accordance with the present invention, the upper annular planar portion may have an annular upper surface, in which case the annular upper surface may have a circular belt-shaped flat surface formed with a predetermined width in a radially outward direction from the outer peripheral edge of the circular hole in the central portion and a truncated conical surface sloping downwardly from an outer peripheral edge of the circular belt-shaped flat surface to a cylindrical outer peripheral surface of the cylindrical engaging suspended portion. In addition, the upper casing may further include a circular belt-shaped projecting portion which integrally projects axially upwardly from the annular upper surface. In the case where the upper casing further has such a circular belt-shaped projecting portion, the annular upper surface may have a truncated conical surface sloping downwardly from an axial lower end of an outer peripheral surface of the circular belt-shaped projecting portion to a cylindrical outer peripheral surface of the cylindrical engaging suspended portion.

According to the thrust sliding bearing in accordance with the above-described aspect, in a case where a fluctuating load such as an inclination has acted on the vehicle body-side mounting member, it is possible to more reliably avoid interference at least at the resiliently fitting portions of the engaging portion of the cylindrical engaging suspended portion and the engaging portion of the cylindrical engaging projecting portion.

In the present invention, the synthetic resin for forming upper casing and the lower casing should preferably excel in mechanical properties, such as wear resistance, shock resistance, sliding properties including creep resistance, and rigidity. Specifically, as the synthetic resin for forming the upper casing and the lower casing, a thermoplastic synthetic resin such as polyacetal resin, polyamide resin, and polyester resin is suitably used. In addition, as the synthetic resin for forming the thrust sliding bearing piece, a thermoplastic synthetic resin such as polyamide resin, polyolefin resin such as a polyethylene resin, and polyester resin, which excel in the sliding characteristics with respect to the thermoplastic synthetic resin for forming the upper and lower casings, is suitably used.

### ADVANTAGES OF THE INVENTION

According to the present invention, the lubricating oil such as grease filled in the annular recessed grooves is constantly fed to the thrust sliding bearing surface, i.e., the sliding surface, during the relative rotation of at least one of the upper casing and the lower casing and the thrust sliding bearing piece, with the result that the lubricating oil is constantly present at the thrust sliding bearing surface during the relative rotation. Thus, it is possible to provide a thrust sliding bearing which is capable of exhibiting further lower frictional properties at the thrust sliding bearing surface by virtue of this lubricant.

### BRIEF DESCRIPTION OF THE DRAWINGS

Fig. 1 is an explanatory cross-sectional view of a preferred embodiment of the present invention;
Fig. 2 is an explanatory plan view of a thrust sliding bearing piece in the embodiment shown in Fig. 1;
Fig. 3 is an explanatory cross-sectional view, taken in the direction of arrows along line III - III shown in Fig. 2, of the thrust sliding bearing piece in the embodiment shown in Fig. 1;
Fig. 4 is an explanatory rear view of the thrust sliding bearing piece in the embodiment shown in Fig. 1;
Fig. 5 is a partially enlarged explanatory cross-sectional view of the thrust sliding bearing piece in the embodiment shown in Fig. 1;
Fig. 6 is an explanatory cross-sectional view of another preferred embodiment of the present invention;
Fig. 7 is an explanatory cross-sectional view of an embodiment in which the thrust sliding bearing of the embodiment shown in Fig. 6 is incorporated in a strut-type suspension;
Fig. 8 is an explanatory cross-sectional view of still another preferred embodiment of the present invention;
Fig. 9 is an explanatory plan view of the embodiment shown in Fig. 8;
Fig. 10 is an explanatory cross-sectional view of a further preferred embodiment of the present invention;
Fig. 11 is an explanatory cross-sectional view of a still further preferred embodiment of the present invention;
Fig. 12 is an explanatory cross-sectional view of a further preferred embodiment of the present invention;
Fig. 13 is an explanatory cross-sectional view of an embodiment in which the thrust sliding bearing of the embodiment shown in Fig. 8 is incorporated in a strut-type suspension;
Fig. 14 is an explanatory cross-sectional view of a further preferred embodiment of the present invention;
Fig. 15 is an explanatory cross-sectional view of still another preferred embodiment of the thrust sliding bearing piece in the embodiment shown in Fig. 1;
Fig. 16 is an explanatory cross-sectional view, taken in the direction of arrows along line XVI - XVI, of the thrust sliding bearing piece in the embodiment shown in Fig. 15;
Fig. 17 is a partially enlarged explanatory cross-sectional view of the thrust sliding bearing shown in Fig. 15;
Fig. 18 is an explanatory cross-sectional view of a conventional synthetic resin-made thrust sliding bearing; and
Fig. 19 is an explanatory plan view of a thrust sliding bearing piece used in the thrust sliding bearing in the embodiment shown in Fig. 18.

### MODE FOR CARRYING OUT THE INVENTION

Hereafter, a more detailed description will be given of the present invention with reference to the preferred embodiments shown in the drawings. It should be noted that the present invention is not limited to these embodiments.

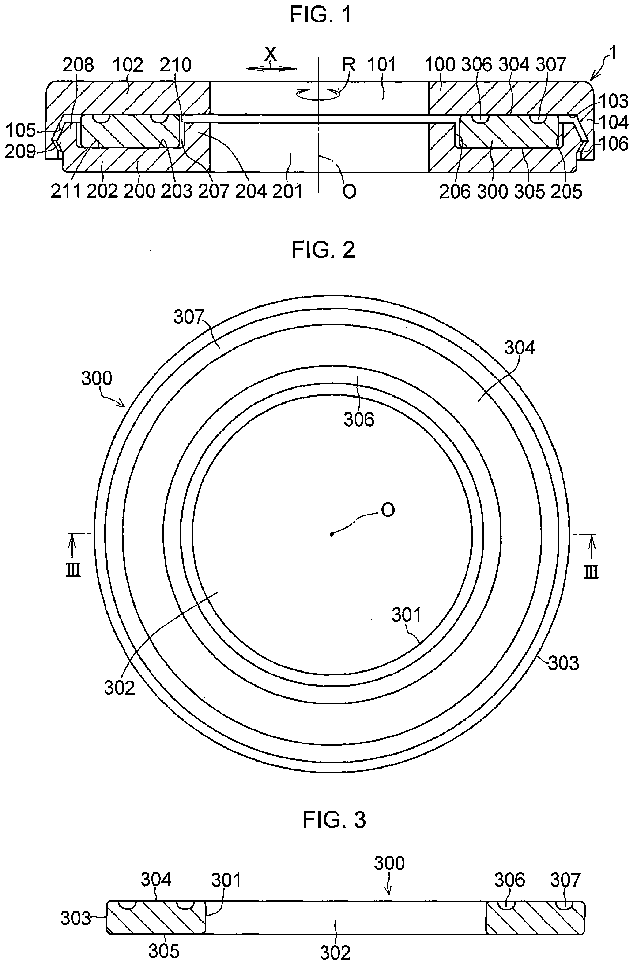

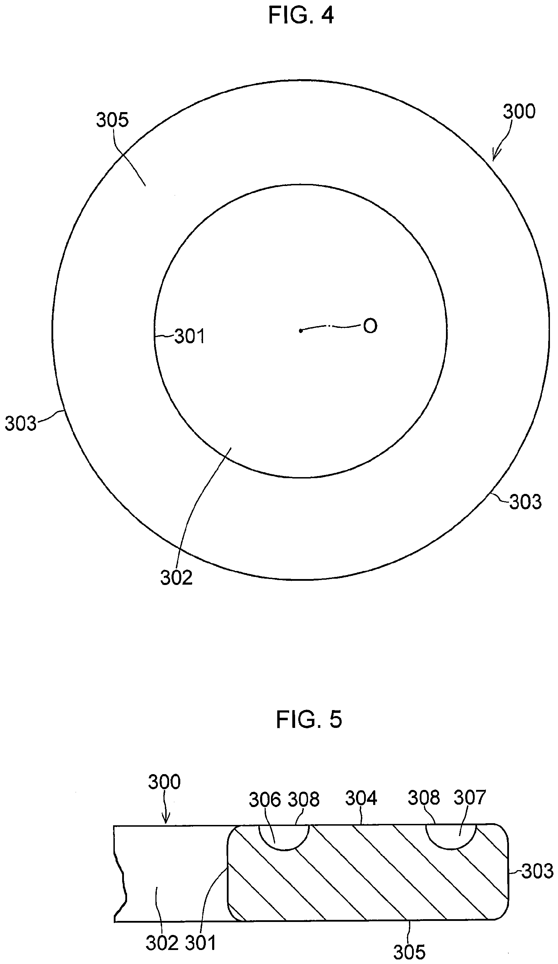

In Figs. 1 to 5, a thrust sliding bearing 1 in accordance with this embodiment is comprised of a synthetic resin-made upper casing 100, a synthetic resin-made lower casing 200, and a synthetic resin-made thrust sliding bearing piece 300 interposed between the upper casing 100 and the lower casing 200.

The upper casing 100 includes an upper annular planar portion 102 having a circular hole 101 in a central portion thereof; a cylindrical engaging suspended portion 104 formed integrally on an outer peripheral edge of an annular lower surface 103 of the upper annular planar portion 102; and an annular engaging portion 106 formed integrally on an end portion of an inner peripheral surface 105 of the cylindrical engaging suspended portion 104.

The lower casing 200, which is superposed on the upper casing 100 so as to be rotatable about an axis O of the upper casing 100 in a circumferential direction R, includes a lower annular planar portion 202 which opposes the upper annular planar portion 102 of the upper casing 100 and has in a central portion thereof an insertion hole 201 identical in diameter and concentric with the circular hole 101 of the upper annular planar portion 102; an annular protrusion 204 which is integrally formed on an annular upper surface 203 of the lower annular planar portion 202 and has an inner peripheral surface with a diameter identical to that of the insertion hole 201; an annular protrusion 208 which is integrally formed on an outer peripheral edge of the annular upper surface 203 of the lower annular planar portion 202 concentrically with the annular protrusion 204 in such a manner as to be radially outwardly spaced apart a predetermined interval from the annular protrusion 204, and which forms at an inner peripheral surface 205 a wide lower annular recess 207 in cooperation with an outer peripheral surface 206 of the annular protrusion 204 and the annular upper surface 203 of the lower annular planar portion 202; and an annular engaging portion 209 formed integrally on an outer peripheral surface of a lower end of the annular protrusion 208. The lower annular recess 207 surrounded by the annular protrusions 204 and 208 is defined by the outer peripheral surface 206 of the annular protrusion 204, the inner peripheral surface 205 of the annular protrusion 208, and the annular upper surface 203 of the lower annular planar portion 202.

The thrust sliding bearing piece 300 has a circular hole 302 defined by an inner peripheral surface 301 having a diameter (inside diameter) larger than the diameter (outside diameter) of the outer peripheral surface 206 of the annular protrusion 204 of the lower casing 200; an outer peripheral surface 303 having a diameter (outside diameter) smaller than the inside diameter of the inner peripheral surface 205 of the annular protrusion 208 of the lower casing 200; an annular upper surface 304 serving as an annular thrust sliding bearing surface; and an annular lower surface 305. The thrust sliding bearing piece 300 is interposed between the upper casing 100 and the lower casing 200 by being disposed in the wide lower annular recess 207 while maintaining annular clearances between the inner peripheral surface 301 and the outer peripheral surface 206 of the annular protrusion 204 and between the outer peripheral surface 303 and the inner peripheral surface 205 of the annular protrusion 208, respectively, such that the upper surface 304 projects above an opening portion 210 of the lower annular recess 207 and is brought into sliding contact with the annular lower surface 103 of the upper annular planar portion 102, while the lower surface 305 is brought into sliding contact with the annular upper surface 203 defining a bottom surface 211 of the lower annular recess 207.

As particularly shown in Figs. 2 to 5, the thrust sliding bearing piece 300 further has an inner annular recessed groove 306 and an outer annular recessed groove 307 which are formed on the upper surface 304 along the circumferential direction R concentrically with each other on the inner side and the outer side in a radial direction X, and a lubricating oil such as grease which is fully filled without any gap in each of the inner annular recessed groove 306 and the outer annular recessed groove 307.

The inner annular recessed groove 306 and the outer annular recessed groove 307, which are formed on the annular upper surface 304 of the thrust sliding bearing piece 300 along the circumferential direction R on the inner and the outer side in the radial direction X, are formed such that the ratio of a total area of opening surfaces 308 of the inner annular recessed groove 306 and the outer annular recessed groove 307 in the surfaces combining the opening surfaces 308 of the inner annular recessed groove 306 and the outer annular recessed groove 307 and the annular upper surface 304 of the thrust sliding bearing piece 300, i.e., the thrust sliding bearing surface, is set to 20 to 50%, preferably 30 to 40%, i.e., to 30% in the embodiment shown in Fig. 2.

The upper casing 100 is combined with the lower casing 200 such that respective upper end faces of the annular protrusions 204 and 208 oppose the annular lower surface 103 with a predetermined interval therebetween, and such that the annular engaging portion 106 formed on the inner peripheral surface of the end portion of the cylindrical engaging suspended portion 104 is resiliently fitted to the annular engaging portion 209 formed on the outer peripheral surface of the lower end of the annular protrusion 208 of the lower casing 200.

In the thrust sliding bearing 1 thus formed, by virtue of the inner annular recessed groove 306 and the outer annular recessed groove 307 formed on the annular upper surface 304 of the thrust sliding bearing piece 300, in the relative rotation about the axis O in the circumferential direction R between the annular upper surface 304 of the thrust sliding bearing piece 300 and the annular lower surface 103 of the upper annular planar portion 102 of the upper casing 100, the area of contact between, on the one hand, the annular upper surface 304 constituting the thrust sliding bearing surface and serving as the sliding surface and, on the other hand, the mating member, i.e., the annular lower surface 103 of the upper annular planar portion 102 of the upper casing 100, is reduced, and the thrust load is borne by the lubricating oil filled in the inner annular recessed groove 306 and the outer annular recessed groove 307. Thus, it is possible to attain further reduction of frictional resistance through the combination of the reduction of frictional resistance in friction among synthetic resins and the reduction of frictional resistance derived from the presence at the sliding surfaces of the lubricating oil filled in the inner annular recessed groove 306 and the outer annular recessed groove 307.

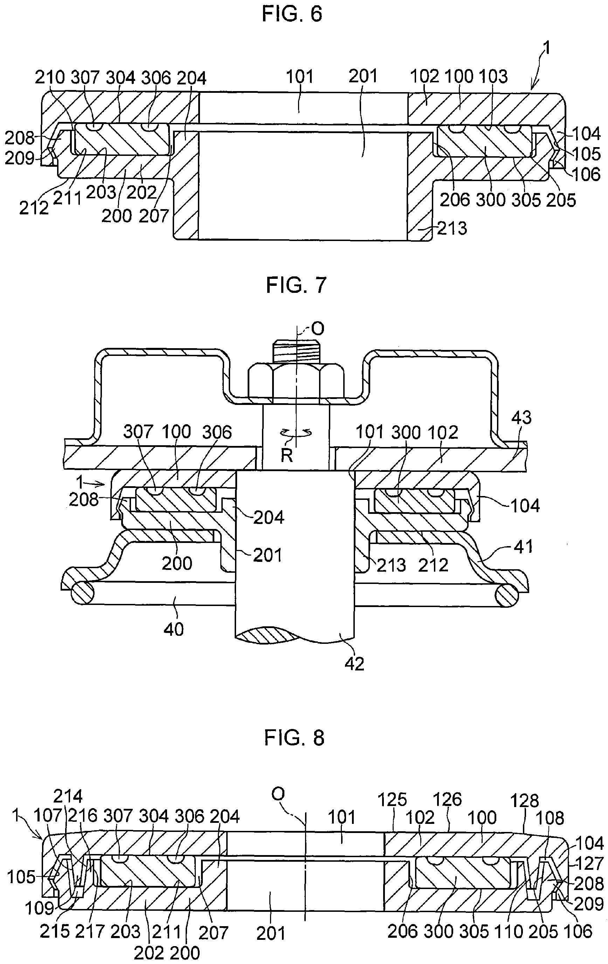

As shown in Fig. 6, the thrust sliding bearing 1 may further have a hollow cylindrical portion 213 which is integrally formed on an annular lower surface 212 of the lower annular planar portion 202 of the lower casing 200 and has an inner peripheral surface with a diameter identical to that of the insertion hole 201.

According to the thrust sliding bearing 1 having the cylindrical portion 213 on the annular lower surface 212 of the lower casing 200, the operation of mounting the thrust sliding bearing 1 is facilitated when, as shown in Fig. 7, it is mounted between an upper spring seat 41 of a coil spring 40 in a strut-type suspension and a mounting member 43 to which a piston rod 42 of a hydraulic damper is secured.

In this case, an upper portion of the piston rod 42 is inserted into the circular hole 101 of the upper casing 100 and the insertion hole 201 of the lower casing 200 in the thrust sliding bearing 1 such as to be rotatable about the axis O in the R direction with respect to the upper casing 100 and the lower casing 200.

With the strut-type suspension installed by means of the thrust sliding bearing 1, as shown in Fig. 7, at the time of steering operation, the relative rotation of the upper spring seat 41 about the axis O in the R direction by means of the coil spring 40 is effected smoothly by the relative rotation of the lower casing 200 in the same direction relative to the upper casing 100 having the thrust sliding bearing piece 300.

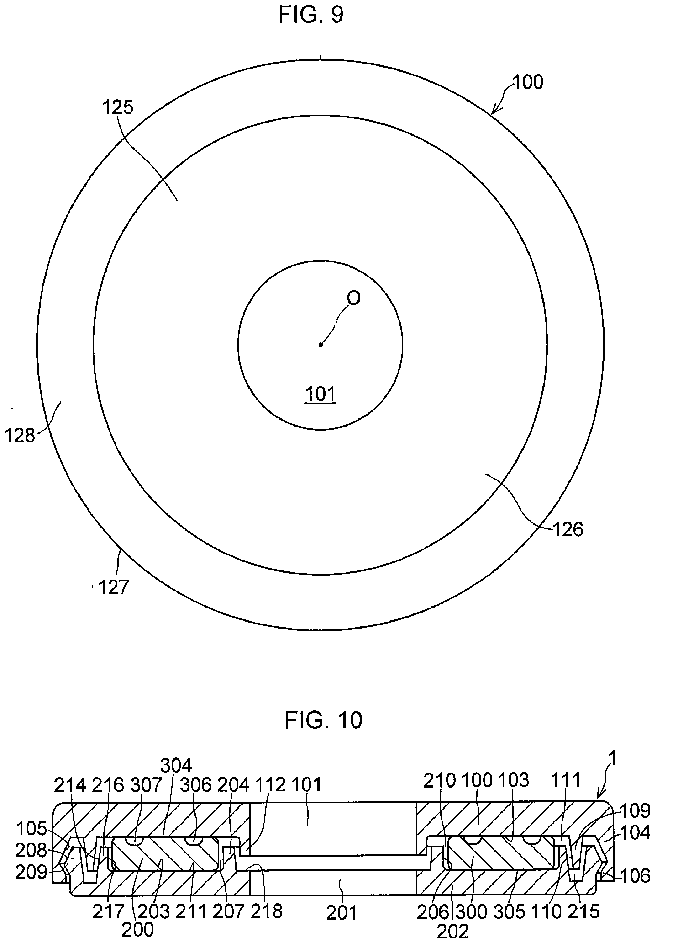

In addition, as shown in Figs. 8 and 9, the thrust sliding bearing 1 may be comprised of the upper casing 100 which further includes a cylindrical suspended portion 109 formed integrally on the annular lower surface 103 in such a manner as to be radially outwardly spaced apart a predetermined interval from the peripheral edge of the circular hole 101 in the central portion of the upper annular planar portion 102 and to be radially inwardly spaced apart a predetermined interval from the inner peripheral surface 105 of the cylindrical engaging suspended portion 104, so as to form at an outer peripheral surface 107 an upper outer annular groove 108 in cooperation with the inner peripheral surface 105 of the cylindrical engaging suspended portion 104; and the lower casing 200 which further includes an annular protrusion 216 formed integrally on the annular upper surface 203 of the lower annular planar portion 202 in such a manner as to be radially outwardly spaced apart a predetermined interval from the outer peripheral surface 206 of the annular protrusion 204, so as to form at an outer peripheral surface 214 a lower outer annular groove 215 in cooperation with the inner peripheral surface 205 of the annular protrusion 208.

In the above-described upper casing 100 and lower casing 200, the upper casing 100 is combined with the lower casing 200 such that the respective upper end faces of the annular protrusions 204 and 208 oppose the annular lower surface 103 with a predetermined interval therebetween and the annular protrusion 208 is disposed in the upper outer annular groove 108, while the lower end face of the cylindrical suspended portion 109 opposes the annular upper surface 203 with a predetermined interval therebetween and the cylindrical suspended portion 109 is disposed in the lower outer annular groove 215 so as to overlap with the annular protrusion 216 and the annular protrusion 208 in the radial direction X, whereby the annular engaging portion 106 formed on the inner peripheral surface of the end portion of the cylindrical engaging suspended portion 104 is resiliently fitted to the annular engaging portion 209 formed on the outer peripheral surface of the lower end of the annular protrusion 208 of the lower casing 200.

Also with the thrust sliding bearing 1 shown in Figs. 8 and 9, the thrust sliding bearing piece 300 having the annular upper surface 304 and lower surface 305 has the inner peripheral surface 301 with an inside diameter larger than the outside diameter of the annular protrusion 204 and has the outer peripheral surface 303 with an outside diameter smaller than the inside diameter of an inner peripheral surface 217 of the annular protrusion 216, and the thrust sliding bearing piece 300 is interposed between the upper casing 100 and the lower casing 200 by being disposed in the wide lower annular recess 207 while maintaining an annular clearance between its inner peripheral surface 301 and the outer peripheral surface 206 of the annular protrusion 204, such that the upper surface 304 projects above the opening portion 210 of the lower annular recess 207 and is brought into sliding contact with the annular lower surface 103 of the upper annular planar portion 102, while the lower surface 305 is brought into sliding contact with the bottom surface 211 of the wide lower annular recess 207 of the lower casing 200.

According to the thrust sliding bearing 1 shown in Figs. 8 and 9, since the upper casing 100 is combined with the lower casing 200 by causing the engaging portions 106 and 209 to be resiliently fitted to each other such that the cylindrical suspended portion 109 is disposed in the lower outer annular groove 215 so as to overlap with the annular protrusion 216 and the annular protrusion 208 in the radial direction X, sealed portions based on labyrinth action are formed at the overlapping portions in the radial direction X of the cylindrical suspended portion 109, the annular protrusion 216, and the annular protrusion 208 and at the resiliently fitting portions of the engaging portions 106 and 209, thereby preventing the entry of foreign objects such as dust onto the sliding surfaces of the upper casing 100 and the lower casing 200.

Furthermore, as shown in Fig. 10, the thrust sliding bearing 1 may be comprised of the upper casing 100 which further includes a cylindrical suspended portion 112 formed integrally on the annular lower surface 103 of the upper annular planar portion 102 in such a manner as to be radially inwardly spaced apart a predetermined interval from an inner peripheral surface 110 of the cylindrical suspended portion 109 and having an inner peripheral surface with a diameter identical to that of the circular hole 101 in the central portion of the upper annular planar portion 102, so as to form a wide upper annular recess 111 in cooperation with the inner peripheral surface 110 and the annular lower surface 103 of the upper annular planar portion 102. Furthermore, in the thrust sliding bearing 1, as shown in Fig. 10, the annular protrusion 204 may be radially outwardly adjacent to the insertion hole 201 via an annular shoulder portion 218, i.e., the annular protrusion 204 may be radially outwardly adjacent to the insertion hole 201 with a predetermined interval therebetween.

In the thrust sliding bearing 1 shown in Fig. 10, the upper casing 100 is combined with the lower casing 200 by causing the engaging portions 106 and 209 to be resiliently fitted to each other, such that a lower end face of the cylindrical suspended portion 112 opposes the annular upper surface 203 of the annular shoulder portion 218 with a predetermined interval therebetween, and the cylindrical suspended portion 112 overlaps with the annular protrusion 204 in the radial direction X, and such that a lower end face of the cylindrical suspended portion 109 opposes the annular upper surface 203 with a predetermined interval therebetween, and the cylindrical suspended portion 109 is disposed in the lower outer annular groove 215 so as to overlap with the annular protrusion 216 and the annular protrusion 208 in the radial direction X.

According to the thrust sliding bearing 1 shown in Fig. 10, since the upper casing 100 is combined with the lower casing 200 by causing the engaging portions 106 and 209 to be resiliently fitted to each other, such that the cylindrical suspended portion 112 overlaps with the annular protrusion 204 in the radial direction X and such that the lower end face of the cylindrical suspended portion 109 opposes the annular upper surface 203 with a predetermined interval therebetween, and the cylindrical suspended portion 109 is disposed in the lower outer annular groove 215 so as to overlap with the annular protrusion 216 and the annular protrusion 208 in the radial direction X, sealed portions based on labyrinth action are formed at the overlapping portions in the radial direction X of the cylindrical suspended portion 112 and the annular protrusion 204, at the overlapping portions in the radial direction X of the cylindrical suspended portion 109, the annular protrusion 216, and the annular protrusion 208, and at the resiliently fitting portions of the engaging portions 106 and 209, thereby preventing the entry of foreign objects such as dust onto the sliding surfaces of the upper casing 100 and the lower casing 200.

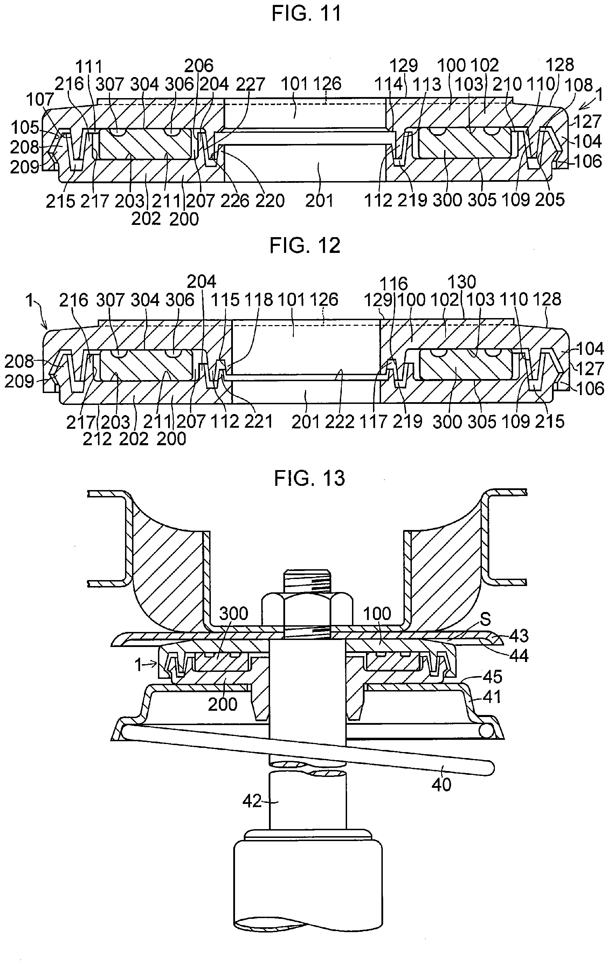

In addition, as shown in Fig. 11, the thrust sliding bearing 1 may be formed such that the cylindrical suspended portion 112 which forms at an outer peripheral surface 113 the wide upper annular recess 111 in cooperation with the inner peripheral surface 110 of the cylindrical suspended portion 109 and the annular lower surface 103 of the upper annular planar portion 102 is radially outwardly adjacent to the circular hole 101 in the central portion of the annular planar portion 102 via an annular shoulder portion 114, i.e., is radially outwardly adjacent to the circular hole 101 with a predetermined interval; meanwhile, the lower casing 200 further includes an annular protrusion 220 which has an inner peripheral surface with a diameter identical to that of the insertion hole 201 formed in the central portion of the lower annular planar portion 202, and which is integrally formed on the annular upper surface 203 of the lower annular planar portion 202 in such a manner as to be radially inwardly spaced apart a predetermined interval from the annular protrusion 204, so as to form at an outer peripheral surface 226 a lower inner annular groove 219 in cooperation with an inner peripheral surface 227 of the annular protrusion 204.

In the thrust sliding bearing 1 shown in Fig. 11, the upper casing 100 is combined with the lower casing 200 by causing the annular engaging portions 106 and 209 to be resiliently fitted to each other, such that the annular lower surface 103 at the annular shoulder portion 114 opposes the upper end face of the annular protrusion 220 with a predetermined interval therebetween, while the lower end face of the cylindrical suspended portion 112 opposes the annular upper surface 203 with a predetermined interval therebetween, such that the cylindrical suspended portion 112 is disposed in the lower inner annular groove 219 so as to overlap with the annular protrusion 204 and the annular protrusion 220 in the radial direction X, and such that the lower end face of the cylindrical suspended portion 109 opposes the annular upper surface 203 with a predetermined interval therebetween, and the cylindrical suspended portion 109 is disposed in the lower outer annular groove 215 so as to overlap with both the annular protrusion 216 and the annular protrusion 208 in the radial direction X.

According to the thrust sliding bearing 1 shown in Fig. 11, since the upper casing 100 is combined with the lower casing 200 by causing the annular engaging portions 106 and 209 to be resiliently fitted to each other, such that the cylindrical suspended portion 112 is disposed in the lower inner annular groove 219 so as to overlap with the annular protrusion 204 and the annular protrusion 220 in the radial direction X, and such that the cylindrical suspended portion 109 is disposed in the lower outer annular groove 215 so as to overlap with both the annular protrusion 216 and the annular protrusion 208 in the radial direction X, sealed portions based on labyrinth action are further formed at the overlapping portions in the radial direction X of the cylindrical suspended portion 112, the annular protrusion 204, and the annular protrusion 220, at the overlapping portions in the radial direction X of the cylindrical suspended portion 109, the annular protrusion 216, and the annular protrusion 208, and at the resiliently fitting portions of the engaging portions 106 and 209, thereby further preventing the entry of foreign objects such as dust between the upper casing 100 and the lower casing 200, particularly from the inner peripheral surface side onto the upper surface 304 serving as the sliding surface.

In addition, with the thrust sliding bearing 1 in accordance with the present invention, as shown in Fig. 12, the upper casing 100 may further include a cylindrical suspended portion 118 which is integrally formed on the annular lower surface 103 at the annular shoulder portion 114 of the upper annular planar portion 102 and has an inner peripheral surface with a diameter identical to that of the circular hole 101 in the central portion of the upper annular planar portion so as to form at an outer peripheral surface 115 an upper inner annular groove 117 in cooperation with an inner peripheral surface 116 of the cylindrical suspended portion 112, and an annular protrusion 221 may be integrally formed on the annular upper surface 203 of the lower annular planar portion 202 in such a manner as to radially outwardly adjacent to an annular shoulder portion 222 of the insertion hole 201 in the central portion of the lower annular planar portion 102, i.e., in such a manner as to be radially outwardly spaced apart from the insertion hole 201 with a predetermined interval therebetween.

In the thrust sliding bearing 1 shown in Fig. 12, the upper casing 100 is combined with the lower casing 200 by causing the annular engaging portions 106 and 209 to be resiliently fitted to each other, such that the lower end face of the cylindrical suspended portion 118 opposes the annular upper surface 203 of the lower annular planar portion 202 with a predetermined interval therebetween, and the cylindrical suspended portion 118 overlaps with the annular protrusion 221 in the radial direction X, such that the upper end face of the annular protrusion 221 opposes the annular lower surface 103 of the upper annular planar portion 102 with a predetermined interval therebetween and the annular protrusion 221 is disposed in the upper inner annular groove 117 so as to overlap with the cylindrical suspended portions 112 and 118 in the radial direction X, such that the lower end face of the cylindrical suspended portion 112 opposes the annular upper surface 203 with a predetermined interval therebetween and the cylindrical suspended portion 112 is disposed in the lower inner annular groove 219 so as to overlap with the annular protrusion 204 and the annular protrusion 221 in the radial direction X, and such that the lower end face of the cylindrical suspended portion 109 opposes the annular upper surface 203 with a predetermined interval therebetween and the cylindrical suspended portion 109 is disposed in the lower outer annular groove 215 so as to overlap with both the annular protrusion 216 and the annular protrusion 208 in the radial direction X. Therefore, sealed portions based on labyrinth action are respectively further formed at the overlapping portions in the radial direction X of the cylindrical suspended portion 118 and the annular protrusion 221, at the overlapping portions in the radial direction X of the cylindrical suspended portion 112, the annular protrusion 221, and the annular protrusion 204, at the overlapping portions in the radial direction X of the cylindrical suspended portion 109, the annular protrusion 216, and the annular protrusion 204, and at the resiliently fitting portions of the engaging portions 106 and 209, thereby further preventing the entry of foreign objects such as dust onto the upper surface 304 serving as the sliding surfaces between the upper casing 100 and the lower casing 200.

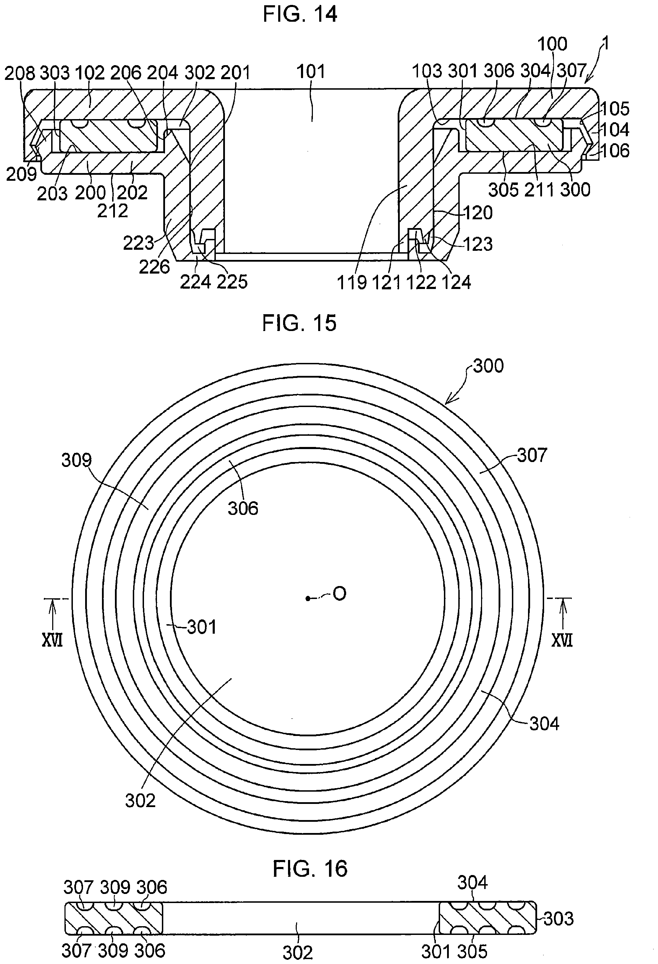

Furthermore, as shown in Fig. 14, the thrust sliding bearing 1 may be comprised of the upper casing 100 including the upper annular planar portion 102 having the circular hole 101 in a central portion thereof, a hollow cylindrical portion 119 formed integrally on the annular lower surface 103 of the upper annular planar portion 102 and having an inner peripheral surface with a diameter identical to that of the circular hole 101, the cylindrical engaging suspended portion 104 formed integrally on the outer peripheral edge of the annular lower surface 103 in such a manner as to be radially outwardly spaced apart a predetermined distance from an outer peripheral surface 120 of the hollow cylindrical portion 119, the annular engaging portion 106 formed integrally on the end portion of the inner peripheral surface of the cylindrical engaging suspended portion 104, an annular protrusion 121 protruding integrally downwardly from a lower end portion of the hollow cylindrical portion 119, and an annular protrusion 124 which protrudes integrally downwardly from a lower end portion of the hollow cylindrical portion 119 so as to form an annular recessed portion 122 in cooperation with the annular protrusion 121, and which has a tapered surface 123 at an outer surface thereof and is tapered in a direction toward the lower side; and the lower casing 200 including the lower annular planar portion 202 having the insertion hole 201 in a central portion thereof, a hollow cylindrical portion 223 which is integrally formed on the annular lower surface 212 of the lower annular planar portion 202 and has an inner peripheral surface 226 with a diameter identical to that of the insertion hole 201, the annular protrusion 204 formed integrally on the annular upper surface 203 of the lower annular planar portion 202, the annular protrusion 208 formed integrally on the outer peripheral edge of the annular upper surface 203 in such a manner as to be radially outwardly spaced apart a predetermined interval from the outer peripheral surface 206 of the annular protrusion 204, the annular engaging portion 209 formed integrally at the lower end of the outer peripheral surface of the annular protrusion 208, an annular protrusion 224 formed integrally at the lower end of the inner peripheral surface 222 of the hollow cylindrical portion 223 in such a manner as to extend radially inwardly from that lower end, and an annular recessed portion 225 formed in the annular protrusion 224, wherein the upper casing 100 is combined with the lower casing 200 such that the outer peripheral surface 120 of the hollow cylindrical portion 119 is brought into sliding contact with the inner peripheral surface 222 of the hollow cylindrical portion 223, the engaging portion 106 is resiliently fitted to the engaging portion 209, and the annular protrusion 124 is disposed in the annular recessed portion 225 with a clearance with the annular protrusion 224.

Also with the thrust sliding bearing 1 shown in Fig. 14, the thrust sliding bearing piece 300 is similar to the thrust sliding bearing piece 300 shown in Fig 1, and the thrust sliding bearing piece 300 has the circular hole 302 defined by the inner peripheral surface 301 with an inside diameter larger than the diameter of the outer peripheral surface 206 of the annular protrusion 204, the outer peripheral surface 303 with an outside diameter smaller than the inside diameter of the annular protrusion 208, and the annular upper surface 304 and lower surface 305. This thrust sliding bearing piece 300 is interposed between the upper casing 100 and the lower casing 200 by being disposed in the wide lower annular recess 207 while maintaining annular clearances respectively between the inner peripheral surface 301 and the outer peripheral surface 206 of the annular protrusion 204 and between the outer peripheral surface 303 and the inner peripheral surface 205 of the annular protrusion 208, such that the upper surface 304 is situated above the opening portion 210 of the lower annular recess 207 and is brought into sliding contact with the annular lower surface 103 of the upper annular planar portion 102, while the lower surface 305 is brought into sliding contact with the annular upper surface 203 defining the bottom surface 211 of the wide lower annular recess 207.

According to the thrust sliding bearing 1 shown in Fig. 14, in the same way as the above-described embodiments, the steering operation can be effected smoothly by allowing smooth relative rotation in the circumferential direction R between the upper casing 100 and the lower casing 200 under a thrust load, and the relative rotation in the circumferential direction R between the upper casing 100 and the lower casing 200 under a radial load can be smoothly allowed by the sliding of the synthetic resins in the radial bearing portion formed by the outer peripheral surface 120 of the hollow cylindrical portion 119 of the upper casing 100 and the inner peripheral surface 222 of the hollow cylindrical portion 223 of the lower casing 200.

In each of the above-described thrust sliding bearings 1, the upper annular planar portion 102 of the upper casing 100 may include an annular upper surface 125 having an annular circular belt-shaped flat surface 126 formed with a predetermined width in the radially outward direction from the outer peripheral edge of the circular hole 101 and a truncated conical surface 128 sloping downwardly from an outer peripheral edge of the circular belt-shaped flat surface 126 to a cylindrical outer peripheral surface 127 of the cylindrical engaging suspended portion 104, as shown in Figs. 8 and 9. Furthermore, the upper casing 100 may have a circular belt-shaped projecting portion 129 formed integrally on the circular belt-shaped flat surface 126 in such a manner as to project axially upwardly from the circular belt-shaped flat surface 126, in which case the annular upper surface 125 may have the truncated conical surface 128 sloping downwardly from an axial lower end of the outer peripheral surface of the circular belt-shaped projecting portion 129 to the cylindrical outer peripheral surface 127 of the cylindrical engaging suspended portion 104, in addition to a circular belt-shaped flat upper surface 130 of the circular belt-shaped projecting portion 129, as shown in Figs. 11 and 12.

As shown in Fig. 13, the thrust sliding bearing 1, which includes the upper casing 100 having the annular upper surface 125 constituted by the annular circular belt-shaped flat surface 126 and the truncated conical surface 128 and is incorporated in the strut-type suspension, is disposed between a lower surface 44 of the vehicle body-side mounting member 43 and an upper surface 45 of the upper spring seat 41 opposing that lower surface 44, such that only the annular circular belt-shaped flat surface 126 is brought into contact with the lower surface 44 of the vehicle body-side mounting member 43, while, at other portions thereof, maintaining a space S with respect to the lower surface 44 of the vehicle body-side mounting member 43. Therefore, even in the case where a fluctuating load such as an inclination has acted on the vehicle body-side mounting member 43, interference does not occur at the overlapping portions in the radial direction X of the cylindrical suspended portion 109, the annular protrusion 216, and the annular protrusion 208, as well as at the resiliently fitting portions of the engaging portion 106 and the engaging portion 209. Hence, it is possible to avoid defects such as deformation, damage, breakage, and the like in these overlapping portions and resiliently fitting portions.

As shown in Figs. 15 to 17, on at least one of the upper surface 304 and the lower surface 305, i.e., in this embodiment on both the upper surface 304 and the lower surface 305 serving as the thrust sliding bearing surfaces, the thrust sliding bearing piece 300 interposed between the upper casing 100 and the lower casing 200 has the inner annular recessed groove 306, an intermediate annular recessed groove 309, and the outer annular recessed groove 307 which are formed along the circumferential direction R of the upper surface 304 and the lower surface 305 and on the inner side, the intermediate side, and the outer side, respectively, in the radial direction X in such a manner as to surround the circular hole 302, as well as a lubricating oil such as grease filled in each of the inner annular recessed groove 306, the intermediate annular recessed groove 309, and the outer annular recessed groove 307.

The inner annular recessed groove 306, the intermediate annular recessed groove 309, and the outer annular recessed groove 307, which are formed on the annular upper surface 304 of the thrust sliding bearing piece 300 along the circumferential direction R on the inner side, the intermediate side, and the outer side in the radial direction X, are formed such that the ratio of a total area of the opening surfaces 308 and an opening surface 310 in the surfaces combining the opening surfaces 308 of the inner annular recessed groove 306 and the outer annular recessed groove 307 and the opening surface 310 of the intermediate annular recessed groove 309, and the upper surface 304 is set to 20 to 50%, preferably 30 to 40%, i.e., to 40% in the embodiment shown in Fig. 15. The plurality of inner annular recessed groove 306, the intermediate annular recessed groove 309, and the outer annular recessed groove 307 are also similarly formed on the annular lower surface 305 of the thrust sliding bearing piece 300.

In the thrust sliding bearing 1 having the thrust sliding bearing piece 300 shown in Figs. 15 to 17, by virtue of the inner annular recessed groove 306, the intermediate annular recessed groove 309, and the outer annular recessed groove 307 which are formed on both the annular upper surface 304 and the lower surface 305 of the thrust sliding bearing piece 300, the area of contact between, on the one hand, e.g., the annular upper surface 304 serving as the sliding surface and, on the other hand, the mating member, i.e., the annular lower surface 103 of the upper annular planar portion 102 of the upper casing 100, is reduced, and the thrust load is borne by the lubricating oil filled in the inner annular recessed groove 306, the intermediate annular recessed groove 309, and the outer annular recessed groove 307. Thus, it is possible to attain further reduction of frictional resistance through the combination of the reduction of frictional resistance in friction among synthetic resins and the reduction of frictional resistance derived from the presence at the sliding surfaces of the lubricating oil filled in the inner annular recessed groove 306, the intermediate annular recessed groove 309, and the outer annular recessed groove 307.

Also with the thrust sliding bearings 1 in the embodiments shown in Fig. 8 and Figs. 10 to 12, the hollow cylindrical portion 213 may be integrally formed on the annular lower surface 212 of the lower annular planar portion 202 of the lower casing 200 in the same way as the thrust sliding bearing 1 in the embodiment shown in Fig. 6.

As described above, with the thrust sliding bearing 1 in accordance with the present invention, since a plurality of (a plurality of rows) of annular recessed grooves which are spaced apart at least in the radial direction X, e.g., the inner annular recessed groove 306 and the outer annular recessed groove 307 which are two (two rows of) annular recessed grooves, are formed on at least one surface of the annular upper surface 304 and the lower surface 305 of the thrust sliding bearing piece 300, which is interposed between the upper casing 100 and the lower casing 200, by being arranged along the circumferential direction R, the lubricating oil such as grease filled in the inner annular recessed groove 306 and the outer annular recessed groove 307 receives the thrust load together with the upper surface 304 and is constantly fed to the sliding surfaces during the relative sliding in the circumferential direction R among the upper casing 100, the lower casing 200, and the thrust sliding bearing piece 300. In consequence, it is possible to obtain a thrust sliding bearing which is capable of exhibiting further lower frictional properties through the combination of the reduction of friction by virtue of the fact that the lubricating oil receives the thrust load, the reduction of friction by virtue of the presence of the lubricating oil at the sliding surfaces during sliding, and the reduction of friction in the sliding among synthetic resins through the reduction of the contact area, with respect to the mating member, of at least one of the upper surface 304 and the lower surface 305 serving as the sliding surfaces of the thrust sliding bearing piece 300.

### DESCRIPTION OF REFERENCE NUMERALS

1: thrust sliding bearing
100: upper casing
200: lower casing
300: thrust sliding bearing piece
101: circular hole
102: upper annular planar portion
103: annular lower surface
104: cylindrical engaging suspended portion
106: engaging portion
201: insertion hole
202: lower annular planar portion
203: annular upper surface
204, 208: annular protrusion
207: lower annular recess
209: engaging portion
302: circular hole
304: upper surface
305: lower surface
306: inner annular recessed groove
307: outer annular recessed groove

## Claims

1. A thrust sliding bearing (1) comprising: a synthetic resin-made upper casing (100) having an upper annular planar portion (102); a synthetic resin-made lower casing (200) which is superposed on said upper casing (100) so as to be rotatable about an axis of said upper casing (100) and has a lower annular planar portion (202) opposing the upper annular planar portion (102) of said upper casing (100), a first and a second annular protrusion (204, 208) formed on the lower annular planar portion (202) concentrically with each other, and a wide lower annular recess (207) surrounded by the first and the second annular protrusion (204, 208); and a synthetic resin-made thrust sliding bearing piece (300) disposed in the lower annular recess (207) of the lower casing (200) and having an annular thrust sliding bearing surface which is brought into sliding contact with at least one of the upper annular planar portion (102) and the lower annular planar portion (202), said thrust sliding bearing piece (300) has at least two annular recessed grooves (306, 307) which are formed on the thrust sliding bearing surface concentrically with each other and a lubricating oil filled in the annular recessed grooves (306, 307), **characterized in that** a ratio of a total area of opening surfaces (308) of the at least two annular recessed grooves (306, 307) in surfaces combining an opening surfaces (304, 308) of the at least two annular recessed grooves (306, 307) and the thrust sliding bearing surface is 20 to 50%.

2. The thrust sliding bearing (1) according to claim 1, wherein the upper annular planar portion (102) has a circular hole (101) in a central portion thereof, the lower annular planar portion (202) having in a central portion thereof an insertion hole (201) concentric with the circular hole (101) of the upper annular planar portion (102); said upper casing (100) has a cylindrical engaging suspended portion (104) formed integrally on an outer peripheral edge of an annular lower surface (103) of the upper annular planar portion (102) and an annular engaging portion (106) formed integrally on an inner peripheral surface (105) of the cylindrical engaging suspended portion (104); the first annular protrusion (204) is integrally formed on an annular upper surface (203) of the lower annular planar portion (202), while the second annular protrusion (208) is integrally formed on an outer peripheral edge of the annular upper surface (203) of the lower annular planar portion (202) in such a manner as to be radially outwardly spaced apart a predetermined interval from the first annular protrusion (204); the lower annular recess (207) is defined by an outer peripheral surface (206) of the first annular protrusion (204), an inner peripheral surface (205) of the second annular protrusion (208), and the annular upper surface (203) of the lower annular planar portion (202); and said lower casing (200) further has an annular engaging portion (209) formed integrally on an outer peripheral surface of the second annular protrusion (208), and said upper casing (100) is combined with said lower casing (200) by causing the annular engaging portion (106) thereof to be resiliently fitted to the annular engaging portion (209) of said lower casing (200).

3. The thrust sliding bearing (1) according to claim 2, wherein said upper casing (100) further includes a first cylindrical suspended portion (109) formed integrally on the annular lower surface (103) of the upper annular planar portion (102) in such a manner as to be radially outwardly spaced apart a predetermined interval from a peripheral edge of the circular hole (101) in the central portion of the upper annular planar portion (102) and to be radially inwardly spaced apart a predetermined interval from the inner peripheral surface (105) of the cylindrical engaging suspended portion (104), so as to form at an outer peripheral surface (107) of the first cylindrical suspended portion (109) an upper outer annular groove (108) in cooperation with the inner peripheral surface (105) of the cylindrical engaging suspended portion (104); said lower casing (200) further includes a third annular protrusion (216) formed integrally on the annular upper surface (203) of the lower annular planar portion (202) in such a manner as to be radially outwardly spaced apart a predetermined interval from the outer peripheral surface (206) of the first annular protrusion (204), so as to form at an outer peripheral surface (214) of the third annular protrusion (216) a lower outer annular groove (215) in cooperation with an inner peripheral surface (205) of the second annular protrusion (208); and said upper casing (100) is combined with said lower casing (200) such that the second annular protrusion (208) is disposed in the upper outer annular groove (108) by causing the upper end face of the second annular protrusion (208) to oppose the annular lower surface (103) of the upper annular planar portion (102) with a predetermined interval therebetween, while the first cylindrical suspended portion (109) is disposed in the lower outer annular groove (215) so as to radially overlap with the second annular protrusion (208) and the third annular protrusion (216).

4. The thrust sliding bearing (1) according to claim 3, wherein said upper casing (100) further includes a second cylindrical suspended portion (112) formed integrally on the annular lower surface (103) of the upper annular planar portion (102) in such a manner as to be radially inwardly spaced apart a predetermined interval from an inner peripheral surface (110) of the first cylindrical suspended portion (109), so as to form a wide upper annular recess (111) in cooperation with the inner peripheral surface (110) and the annular lower surface (103) of the upper annular planar portion (102), the first annular protrusion (204) being radially outwardly adjacent to the insertion hole (201) with a predetermined interval therebetween, and wherein said upper casing (100) is combined with said lower casing (200) such that a lower end face of the second cylindrical suspended portion (112) opposes the annular upper surface (203) of the lower annular planar portion (202) with a predetermined interval therebetween, and such that the second cylindrical suspended portion (112) radially overlaps with the first annular protrusion (204).

5. The thrust sliding bearing (1) according to claim 4, wherein the second cylindrical suspended portion (112) has an inner peripheral surface with a diameter identical to that of the circular hole (101) in the central portion of the upper annular planar portion (102).

6. The thrust sliding bearing (1) according to claim 4, wherein the second cylindrical suspended portion (112) is radially outwardly adjacent to the circular hole (101) in the central portion of the upper annular planar portion (102) with a predetermined interval therebetween, and said lower casing (200) further includes a fourth annular protrusion (220) which is integrally formed on the annular upper surface (203) of the lower annular planar portion (202) in such a manner as to be radially inwardly spaced apart a predetermined interval from the first annular protrusion (204), so as to form at an outer peripheral surface (226) thereof a lower inner annular groove (219) in cooperation with the inner peripheral surface (227) of the first annular protrusion (204), and wherein said upper casing (100) is combined with said lower casing (200) such that the lower end face of the second cylindrical suspended portion (112) opposes the annular upper surface (203) of the lower annular planar portion (202) with a predetermined interval therebetween, and the second cylindrical suspended portion (112) is disposed in the lower inner annular groove (219) so as to radially overlap with the first annular protrusion (204) and the fourth annular protrusion (220).

7. The thrust sliding bearing (1) according to claim 6, wherein the fourth annular protrusion (220) has an inner peripheral surface with a diameter identical to that of the insertion hole (201) formed in the central portion of the lower annular planar portion (202).

8. The thrust sliding bearing (1) according to claim 6, wherein said upper casing (100) further includes a third cylindrical suspended portion (118) which is integrally formed on the annular lower surface (103) of the upper annular planar portion (102) and has an inner peripheral surface with a diameter identical to that of the circular hole (101) in the central portion of the upper annular planar portion (102) so as to form at an outer peripheral surface (115) thereof an upper inner annular groove (117) in cooperation with an inner peripheral surface (116) of the second cylindrical suspended portion (112), and the fourth annular protrusion (220) is integrally formed on the annular upper surface (203) of the lower annular planar portion (202) in such a manner as to be radially outwardly spaced apart a predetermined interval from the insertion hole (201) in the central portion of the lower annular planar portion (202), and wherein said upper casing (100) is combined with said lower casing (200) such that a lower end face of the third cylindrical suspended portion (118) opposes the annular upper surface (203) of the lower annular planar portion (202) with a predetermined interval therebetween, and the third cylindrical suspended portion (118) radially overlaps with the fourth annular protrusion (220), and such that an upper end face of the fourth annular protrusion (220) opposes the annular lower surface (103) of the upper annular planar portion (102) with a predetermined interval therebetween, and the fourth annular protrusion (220) is disposed in the upper inner annular groove (117) to cause the fourth annular protrusion (220) to radially overlap with the second cylindrical suspended portion (112) and the third cylindrical suspended portion (118).

9. The thrust sliding bearing (1) according to any one of claims 2 to 8, wherein said lower casing (200) further includes a hollow cylindrical portion (213) which is integrally formed on an annular lower surface (212) of the lower annular planar portion (202) and has an inner peripheral surface with a diameter identical to the insertion hole (201) in the central portion.

10. The thrust sliding bearing (1) according to claim 2, wherein said upper casing (100) further includes a hollow cylindrical portion (119) which is integrally formed on the annular lower surface (103) of the upper annular planar portion (102) and has an inner peripheral surface with a diameter identical to the circular hole (101) in the central portion of the upper annular planar portion (102), and said lower casing (200) further includes a hollow cylindrical portion (223) which is integrally formed on the annular lower surface (212) of the lower annular planar portion (202) and has an inner peripheral surface (226) with a diameter identical to the insertion hole (201), and wherein said upper casing (100) is combined with said lower casing (200) such that an outer peripheral surface (120) of the hollow cylindrical portion (119) is brought into sliding contact with the inner peripheral surface (226) of the hollow cylindrical portion (223) of said lower casing (200).

11. The thrust sliding bearing (1) according to any one of claims 2 to 10, wherein the upper annular planar portion (102) has an annular upper surface (125) which has a circular belt-shaped flat surface (126) with a predetermined width in a radially outward direction from the outer peripheral edge of the circular hole (101) in the central portion and a truncated conical surface (128) sloping downwardly from an outer peripheral edge of the circular belt-shaped flat surface (126) to a cylindrical outer peripheral surface (127) of the cylindrical engaging suspended portion (104).

12. The thrust sliding bearing (1) according to any one of claims 2 to 10, wherein the upper annular planar portion (102) has an annular upper surface (125), and said upper casing (100) further includes a circular belt-shaped projecting portion (129) which integrally projects axially upwardly from the annular upper surface (125).

13. The thrust sliding bearing (1) according to claim 12, wherein the annular upper surface (125) has a truncated conical surface (128) sloping downwardly from an axial lower end of an outer peripheral surface of the circular belt-shaped projecting portion (129) to a cylindrical outer peripheral surface (127) of the cylindrical engaging suspended portion (104).

## Patentansprüche

1. Druckgleitlager (1), umfassend: ein oberes Gehäuse (100) aus Kunstharz mit einem oberen ringförmigen ebenen Abschnitt (102); ein unteres Gehäuse (200) aus Kunstharz, welches das obere Gehäuse (100) derart überlagert, dass es um eine Achse des oberen Gehäuses (100) drehbar ist, und welches einen unteren ringförmigen ebenen Abschnitt (202), welcher dem oberen ringförmigen ebenen Abschnitt (102) des oberen Gehäuses (100) gegenüberliegt, einen konzentrisch zueinander auf dem unteren ringförmigen ebenen Abschnitt (202) ausgebildeten ersten und zweiten ringförmigen Vorsprung (204, 208) und eine von dem ersten und dem zweiten ringförmigen Vorsprung (204, 208) umgebene, breite untere ringförmige Aussparung (207) aufweist; und ein Druckgleitlagerteil (300) aus Kunstharz, welches in der unteren ringförmigen Aussparung (207) des unteren Gehäuses (200) angeordnet ist und eine ringförmige Druckgleitlagerfläche hat, welche in gleitenden Kontakt mit mindestens einem der oberen ringförmigen ebenen Abschnitte (102) und dem unteren ringförmigen ebenen Abschnitt (202) gebracht wird,
wobei das Druckgleitlagerteil (300) mindestens zwei ringförmige ausgesparte Nuten (306, 307), welche konzentrisch zueinander auf der Druckgleitlagerfläche ausgebildet sind, und ein in die ringförmigen ausgesparten Nuten (306, 307) gefülltes Schmieröl aufweist, **dadurch gekennzeichnet,**
**dass** ein Anteil einer Gesamtfläche von Öffnungsflächen (308) der mindestens zwei ringförmigen ausgesparten Nuten (306, 307) 20 % bis 50 % von Flächen ist, welche eine Öffnungsfläche (304, 308) der mindestens zwei ringförmigen ausgesparten Nuten (306, 307) und die Druckgleitlagerfläche verbinden.

2. Druckgleitlager (1) nach Anspruch 1, wobei der obere ringförmige ebene Abschnitt (102) ein kreisförmiges Loch (101) in einem zentralen Abschnitt hiervon aufweist, wobei der untere ringförmige ebene Abschnitt (202) ein mit dem kreisförmigen Loch (101) des oberen ringförmigen ebenen Abschnitts (102) konzentrisch ausgebildetes Einsteckloch (201) in einem zentralen Abschnitt hiervon aufweist; wobei das obere Gehäuse (100) einen auf einem Außenumfangsrand einer ringförmigen unteren Fläche (103) des oberen ringförmigen ebenen Abschnitts (102) einstückig ausgebildeten zylindrischen suspendierten Eingriffsabschnitt (104) und einen einstückig auf einer Innenumfangsfläche (105) des zylindrischen suspendierten Eingriffsabschnitts (104) ausgebildeten ringförmigen Eingriffsabschnitt (106) aufweist; wobei der erste ringförmige Vorsprung (204) auf einer kreisförmigen oberen Fläche (203) des unteren ringförmigen ebenen Abschnitts (202) einstückig ausgebildet ist, während der zweite ringförmige Vorsprung (208) auf einem Außenumfangsrand der ringförmigen oberen Fläche (203) des unteren ringförmigen ebenen Abschnitts (202) derart einstückig ausgebildet ist, dass der zweite ringförmige Vorsprung (208) von dem ersten ringförmigen Vorsprung (204) in einem vorbestimmten Abstand radial nach außen beabstandet angeordnet ist; wobei die untere ringförmige Aussparung (207) von einem Außenumfangsfläche (206) des ersten ringförmigen Vorsprungs (204), einer Innenumfangsfläche (205) des zweiten ringförmigen Vorsprungs (208) und der ringförmigen oberen Fläche (203) des unteren ringförmigen ebenen Abschnitts (202) definiert ist; und wobei das untere Gehäuse (200) des Weiteren einen auf einer Außenumfangsfläche des zweiten ringförmigen Vorsprungs (208) einstückig ausgebildeten ringförmigen Eingriffsabschnitt (209) aufweist und das obere Gehäuse (100) mit dem unteren Gehäuse (200) kombiniert ist, indem eine elastische Anpassung des ringförmigen Eingriffsabschnitts (106) hiervon an den ringförmigen Eingriffsabschnitt (209) des unteren Gehäuses (200) erfolgt.

3. Druckgleitlager (1) nach Anspruch 2, wobei das obere Gehäuse (100) des Weiteren einen ersten zylindrischen suspendierten Abschnitt (109) aufweist, welcher auf der ringförmigen unteren Fläche (103) des oberen ringförmigen ebenen Abschnitt (102) derart einstückig ausgebildet ist, dass der erste zylindrische suspendierte Abschnitt (109) von einem Umfangsrand des kreisförmigen Lochs (101) in dem zentralen Abschnitt des oberen ringförmigen ebenen Abschnitts (102) in einem vorbestimmten Abstand radial nach außen beabstandet angeordnet ist und von der Innenumfangsfläche (105) des zylindrischen suspendierten Eingriffsabschnitts (104) in einem vorbestimmten Abstand radial nach innen beabstandet angeordnet ist, um an einer Außenumfangsfläche (107) des ersten zylindrischen suspendierten Abschnitts (109) eine obere äußere ringförmige Nut (108) zusammen mit der Innenumfangsfläche (105) des zylindrischen suspendierten Eingriffsabschnitts (104) auszubilden; wobei das untere Gehäuse (200) des Weiteren einen dritten ringförmigen Vorsprung (216) aufweist, welcher auf der ringförmigen oberen Fläche (203) des unteren ringförmigen ebenen Abschnitts (202) derart einstückig ausgebildet ist, dass der dritte ringförmige Vorsprung (216) von der Außenumfangsfläche (206) des ersten ringförmigen Vorsprungs (204) in einem vorbestimmten Abstand radial nach außen beabstandet angeordnet ist, um an einer Außenumfangsfläche (214) des dritten ringförmigen Vorsprungs (216) eine untere äußere ringförmige Nut (215) zusammen mit einer Innenumfangsfläche (205) des zweiten ringförmigen Vorsprungs (208) auszubilden; und wobei das obere Gehäuse (100) derart mit dem unteren Gehäuse (200) kombiniert ist, dass der zweite ringförmige Vorsprung (208) in der oberen äußeren ringförmigen Nut (108) angeordnet ist, indem ein Gegenüberliegen der oberen Endfläche des zweiten ringförmigen Vorsprungs (208) gegenüber der ringförmigen unteren Fläche (103) des oberen ringförmigen ebenen Abschnitts (102) mit einem dazwischenliegenden vorbestimmten Abstand erfolgt, während der erste zylindrische suspendierte Abschnitt (109) in der unteren äußeren ringförmigen Nut (215) derart angeordnet ist, dass sich der erste zylindrische suspendierte Abschnitt (109) mit dem zweiten ringförmigen Vorsprung (208) und dem dritten ringförmigen Vorsprung (216) radial überlagert.

4. Druckgleitlager (1) nach Anspruch 3, wobei das obere Gehäuse (100) des Weiteren einen zweiten zylindrischen suspendierten Abschnitt (112) aufweist, welcher auf der ringförmigen unteren Fläche (103) des oberen ringförmigen ebenen Abschnitts (102) derart einstückig ausgebildet ist, dass der zweite zylindrische suspendierte Abschnitt (112) von einer Innenumfangsfläche (110) des ersten zylindrischen suspendierten Abschnitts (109) in einem vorbestimmten Abstand radial nach innen beabstandet angeordnet ist, um eine breite obere ringförmige Aussparung (111) zusammen mit der Innenumfangsfläche (110) und der ringförmigen unteren Fläche (103) des oberen ringförmigen ebenen Abschnitts (102) auszubilden, wobei der erste ringförmige Vorsprung (204) mit einem dazwischenliegenden vorbestimmten Abstand dem Einsteckloch (201) benachbart radial nach außen angeordnet ist, und wobei das obere Gehäuse (100) derart mit dem unteren Gehäuse (200) kombiniert ist, dass eine untere Endfläche des zweiten zylindrischen suspendierten Abschnitts (112) der ringförmigen oberen Fläche (203) des unteren ringförmigen ebenen Abschnitts (202) mit einem dazwischenliegenden vorbestimmten Abstand gegenüberliegt, und derart, dass der zweite zylindrische suspendierte Abschnitt (112) den ersten ringförmigen Vorsprung (204) radial überlagert.

5. Druckgleitlager (1) nach Anspruch 4, wobei der zweite zylindrische suspendierte Abschnitt (112) eine Innenumfangsfläche mit einem Durchmesser hat, der identisch zu dem des kreisförmigen Lochs (101) in dem zentralen Abschnitt des oberen ringförmigen ebenen Abschnitts (102) ist.

6. Druckgleitlager (1) nach Anspruch 4, wobei der zweite zylindrische suspendierte Abschnitt (112) mit einem dazwischenliegenden vorbestimmten Abstand dem kreisförmigen Loch (101) in dem zentralen Abschnitt des oberen ringförmigen ebenen Abschnitts (102) benachbart radial nach außen angeordnet ist, und wobei das untere Gehäuse (200) des Weiteren einen vierten ringförmigen Vorsprung (220) aufweist, welcher auf der oberen Fläche (203) des unteren ringförmigen ebenen Abschnitts (202) derart einstückig ausgebildet ist, dass der vierte ringförmige Vorsprung (220) von dem ersten ringförmigen Vorsprung (204) in einem vorbestimmten Abstand radial nach innen beabstandet angeordnet ist, sodass an einer Außenumfangsfläche (226) hiervon eine untere innere ringförmige Nut (219) zusammen mit der Innenumfangsfläche (227) des ersten ringförmigen Vorsprungs (204) ausgebildet wird, und wobei das obere Gehäuse (100) derart mit dem unteren Gehäuse (200) kombiniert ist, dass die untere Endfläche des zweiten zylindrischen suspendierten Abschnitts (112) der ringförmigen oberen Fläche (203) des unteren ringförmigen ebenen Abschnitts (202) mit einem dazwischenliegenden vorbestimmten Abstand gegenüberliegt, und wobei der zweite zylindrische suspendierte Abschnitt (112) in der unteren inneren ringförmigen Nut (219) angeordnet ist, sodass der zweite zylindrische suspendierte Abschnitt (112) den ersten ringförmigen Vorsprung (204) und den vierten ringförmigen Vorsprung (220) radial überlagert.

7. Druckgleitlager (1) nach Anspruch 6, wobei der vierte ringförmige Vorsprung (220) eine Innenumfangsfläche mit einem Durchmesser hat, welcher identisch zu dem des in dem zentralen Abschnitt des unteren ringförmigen ebenen Abschnitts (202) ausgebildeten Einstecklochs (201) ist.

8. Druckgleitlager (1) nach Anspruch 6, wobei das obere Gehäuse (100) des Weiteren einen dritten zylindrischen suspendierten Abschnitt (118) aufweist, welcher auf der ringförmigen unteren Fläche (103) des oberen ringförmigen ebenen Abschnitts (102) einstückig ausgebildet ist und eine Innenumfangsfläche mit einem Durchmesser hat, welcher identisch zu dem des kreisförmigen Lochs (101) in dem zentralen Abschnitt des oberen ringförmigen ebenen Abschnitts (102) ist, sodass an einer Außenumfangsfläche (115) hiervon eine obere innere ringförmige Nut (117) zusammen mit einer Innenumfangsfläche (116) des zweiten zylindrischen suspendierten Abschnitts (112) ausgebildet wird, und wobei der vierte ringförmige Vorsprung (220) auf der ringförmigen oberen Fläche (203) des unteren ringförmigen ebenen Abschnitts (202) derart einstückig ausgebildet ist, dass der vierte ringförmige Vorsprung (220) von dem Einsteckloch (201) in dem zentralen Abschnitt des unteren ringförmigen ebenen Abschnitts (202) mit einem vorbestimmten Abstand radial nach außen beabstandet angeordnet ist, und wobei das obere Gehäuse (100) derart mit dem unteren Gehäuse (200) kombiniert ist, dass eine untere Endfläche des dritten zylindrischen suspendierten Abschnitts (118) der ringförmigen oberen Fläche (203) des unteren ringförmigen ebenen Abschnitts (202) mit einem dazwischenliegenden vorbestimmten Abstand gegenüberliegt, und der dritte zylindrische suspendierte Abschnitt (118) den vierten ringförmigen Vorsprung (220) radial überlagert, und derart, dass eine obere Endfläche des vierten ringförmigen Vorsprungs (220) der ringförmigen unteren Fläche (103) des oberen ringförmigen ebenen Abschnitts (102) mit einem dazwischenliegenden vorbestimmten Abstand gegenüberliegt, und wobei der vierte ringförmige Vorsprung (220) in der oberen inneren ringförmigen Nut (117) angeordnet, sodass eine radiale Überlagerung des vierten ringförmigen Vorsprungs (220) mit dem zweiten zylindrischen suspendierten Abschnitt (112) und dem dritten zylindrischen suspendierten Abschnitt (118) erfolgt.

9. Druckgleitlager (1) nach einem der Ansprüche 2 bis 8, wobei das untere Gehäuse (200) des Weiteren einen hohlen zylindrischen Abschnitt (213) aufweist, welcher auf einer ringförmigen unteren Fläche (212) des unteren ringförmigen ebenen Abschnitts (202) einstückig ausgebildet ist und welcher eine Innenumfangsfläche mit einem Durchmesser hat, welcher identisch zu dem des Einstecklochs (201) in dem zentralen Abschnitt ist.

10. Druckgleitlager (1) nach Anspruch 2, wobei das obere Gehäuse (100) des Weiteren einen hohlen zylindrischen Abschnitt (119) aufweist, welcher auf der ringförmigen unteren Fläche (103) des oberen ringförmigen ebenen Abschnitts (102) einstückig ausgebildet ist und welcher eine Innenumfangsfläche mit einem Durchmesser hat, welcher identisch zu dem des kreisförmigen Lochs (101) in dem zentralen Abschnitt des oberen ringförmigen ebenen Abschnitts (102) ist, und wobei das untere Gehäuse (200) des Weiteren einen hohlen zylindrischen Abschnitt (223) aufweist, welcher einstückig auf der ringförmigen unteren Fläche (212) des unteren ringförmigen ebenen Abschnitts (202) ausgebildet ist und welcher eine Innenumfangsfläche (226) mit einem Durchmesser hat, welcher identisch zu dem des Einstecklochs (201) ist, und wobei das obere Gehäuse (100) derart mit dem unteren Gehäuse (200) kombiniert ist, dass eine Außenumfangsfläche (120) des hohlen zylindrischen Abschnitts (119) in gleitenden Kontakt mit der Innenumfangsfläche (226) des hohlen zylindrischen Abschnitts (223) des unteren Gehäuses (200) gebracht wird.

11. Druckgleitlager (1) nach einem der Ansprüche 2 bis 10, wobei der obere ringförmige ebene Abschnitt (102) eine ringförmige obere Fläche (125) aufweist, welche eine kreisförmige gürtelförmige flache Fläche (126) mit einer vorbestimmten Breite in einer radial äußeren Richtung von dem Außenumfangsrand des kreisförmigen Lochs (101) in dem zentralen Abschnitt und eine abgeflachte konische Fläche (128) hat, die von einem Außenumfangsrand der kreisförmigen gürtelförmigen flachen Fläche (126) in Richtung einer zylindrischen Außenumfangsfläche (127) des zylindrischen suspendierten Eingriffsabschnitts (104) nach unten geneigt ist.

12. Druckgleitlager (1) nach einem der Ansprüche 2 bis 10, wobei der obere ringfönnige ebene Abschnitt (102) eine ringförmige obere Fläche (125) hat, und wobei das obere Gehäuse (100) des Weiteren einen kreisförmigen gürtelförmigen hervorstehenden Abschnitt (129) hat, welcher von der ringförmigen oberen Fläche (125) einstückig axial nach oben hervorsteht.

13. Druckgleitlager (1) nach Anspruch 12, wobei die ringförmige obere Fläche (125) eine abgeflachte konische Fläche (128) hat, welche von einem axialen unteren Ende der Außenumfangsfläche des kreisförmigen gürtelförmigen hervorstehenden Abschnitts (129) in Richtung einer zylindrischen Außenumfangsfläche (127) des zylindrischen suspendierten Eingriffsabschnitts (104) nach unten geneigt ist.

## Revendications

1. Palier de butée à glissière (1) comprenant : un boîtier supérieur constitué de résine synthétique (100) présentant une partie plane annulaire supérieure (102) ; un boîtier inférieur constitué de résine synthétique (200) qui est superposé sur ledit boîtier supérieur (100) de manière à pouvoir tourner autour d'un axe dudit boîtier supérieur (100) et présente une partie plane annulaire inférieure (202) opposée à la partie plane annulaire supérieure (102) dudit boîtier supérieur (100), une première et une deuxième saillie annulaire (204, 208) étant formées sur la partie plane annulaire inférieure (202) de manière concentrique l'une par rapport à l'autre et un évidement annulaire inférieur large (207) entouré par la première et la deuxième saillie annulaire (204, 208) ; et un élément de palier de butée à glissière constitué de résine synthétique (300) disposé dans l'évidement annulaire inférieur (207) du boîtier inférieur (200) et présentant une surface de palier de butée à glissière annulaire qui est amenée en contact coulissant avec la partie plane annulaire supérieure (102) et/ou la partie plane annulaire inférieure (202),
ledit élément de palier de butée à glissière (300) présentant au moins deux rainures annulaires en retrait (306, 307) qui sont formées sur la surface de palier de butée à glissière de manière concentrique l'une par rapport à l'autre et une huile lubrifiante remplissant les rainures annulaires en retrait (306, 307), **caractérisé en ce que**
un rapport d'une superficie totale de surfaces d'ouverture (308) des au moins deux rainures annulaires en retrait (306, 307) dans des surfaces combinant des surfaces d'ouverture (304, 308) des au moins deux rainures annulaires en retrait (306, 307) et la surface de palier de butée à glissière étant de 20 à 50 %.

2. Palier de butée à glissière (1) selon la revendication 1, dans lequel la partie plane annulaire supérieure (102) présente un trou circulaire (101) dans une partie centrale de celle-ci, la partie plane annulaire inférieure (202) présentant dans une partie centrale de celle-ci un trou d'insertion (201) concentrique par rapport au trou circulaire (101) de la partie plane annulaire supérieure (102) ; ledit boîtier supérieur (100) présente une partie suspendue de mise en prise cylindrique (104) formée d'un seul tenant sur un bord périphérique extérieur d'une surface inférieure annulaire (103) de la partie plane annulaire supérieure (102) et une partie de mise en prise annulaire (106) formée d'un seul tenant sur une surface périphérique intérieure (105) de la partie suspendue de mise en prise cylindrique (104) ; la première saillie annulaire (204) est formée d'un seul tenant sur une surface supérieure annulaire (203) de la partie plane annulaire inférieure (202), tandis que la deuxième saillie annulaire (208) est formée d'un seul tenant sur un bord périphérique extérieur de la surface supérieure annulaire (203) de la partie plane annulaire inférieure (202) de manière à être espacée radialement vers l'extérieur d'un intervalle prédéterminé depuis la première saillie annulaire (204) ; l'évidement annulaire inférieur (207) est défini par une surface périphérique extérieure (206) de la première saillie annulaire (204), une surface périphérique intérieure (205) de la deuxième saillie annulaire (208) et la surface supérieure annulaire (203) de la partie plane annulaire inférieure (202) ; et ledit boîtier inférieur (200) comporte en outre une partie de mise en prise annulaire (209) formée d'un seul tenant sur une surface périphérique extérieure de la deuxième saillie annulaire (208) et ledit boîtier supérieur (100) est combiné audit boîtier inférieur (200) en amenant la partie de mise en prise annulaire (106) de celui-ci à être fixée élastiquement sur la partie de mise en prise annulaire (209) dudit boîtier inférieur (200).

3. Palier de butée à glissière (1) selon la revendication 2, dans lequel ledit boîtier supérieur (100) comprend en outre une première partie suspendue cylindrique (109) formée d'un seul tenant sur la surface inférieure annulaire (103) de la partie plane annulaire supérieure (102) de manière à être espacée radialement vers l'extérieur d'un intervalle prédéterminé d'un bord périphérique du trou circulaire (101) dans la partie centrale de la partie plane annulaire supérieure (102) et à être espacée radialement vers l'intérieur d'un intervalle prédéterminé depuis la surface périphérique intérieure (105) de la partie suspendue de mise en prise cylindrique (104), de manière à former au niveau d'une surface périphérique extérieure (107) de la première partie suspendue cylindrique (109) une rainure annulaire extérieure supérieure (108) en coopération avec la surface périphérique intérieure (105) de la partie suspendue de mise en prise cylindrique (104) ; ledit boîtier inférieur (200) comprend en outre une troisième saillie annulaire (216) formée d'un seul tenant sur la surface supérieure annulaire (203) de la partie plane annulaire inférieure (202) de manière à être espacée radialement vers l'extérieur d'un intervalle prédéterminé de la surface périphérique extérieure (206) de la première saillie annulaire (204), de manière à former au niveau d'une surface périphérique extérieure (214) de la troisième saillie annulaire (216) une rainure annulaire extérieure inférieure (215) en coopération avec une surface périphérique intérieure (205) de la deuxième saillie annulaire (208) ; et ledit boîtier supérieur (100) est combiné audit boîtier inférieur (200) de manière que la deuxième saillie annulaire (208) est disposée dans la rainure annulaire extérieure supérieure (108) en amenant la face d'extrémité supérieure de la deuxième saillie annulaire (208) à s'opposer à la surface inférieure annulaire (103) de la partie plane annulaire supérieure (102) avec un intervalle prédéterminé entre celles-ci, tandis que la première partie suspendue cylindrique (109) est disposée dans la rainure annulaire extérieure inférieure (215) de manière à chevaucher radialement la deuxième saillie annulaire (208) et la troisième saillie annulaire (216).

4. Palier de butée à glissière (1) selon la revendication 3, dans lequel ledit boîtier supérieur (100) comprend en outre une deuxième partie suspendue cylindrique (112) formée d'un seul tenant sur la surface inférieure annulaire (103) de la partie plane annulaire supérieure (102) de manière à être espacée radialement vers l'intérieur d'un intervalle prédéterminé depuis une surface périphérique intérieure (110) de la première partie suspendue cylindrique (109), de manière à former un évidement annulaire supérieur large (111) en coopération avec la surface périphérique intérieure (110) et la surface inférieure annulaire (103) de la partie plane annulaire supérieure (102), la première saillie annulaire (204) étant radialement adjacente vers l'extérieur au trou d'insertion (201) avec un intervalle prédéterminé entre ceux-ci, et ledit boîtier supérieur (100) étant combiné audit boîtier inférieur (200) de manière qu'une face d'extrémité inférieure de la deuxième partie suspendue cylindrique (112) s'oppose à la surface supérieure annulaire (203) de la partie plane annulaire inférieure (202) avec un intervalle prédéterminé entre celles-ci, et de manière que la deuxième partie suspendue cylindrique (112) chevauche radialement la première saillie annulaire (204).

5. Palier de butée à glissière (1) selon la revendication 4, dans lequel la deuxième partie suspendue cylindrique (112) présente une surface périphérique intérieure avec un diamètre identique à celui du trou circulaire (101) dans la partie centrale de la partie plane annulaire supérieure (102).

6. Palier de butée à glissière (1) selon la revendication 4, dans lequel la deuxième partie suspendue cylindrique (112) est radialement adjacente vers l'extérieur au trou circulaire (101) dans la partie centrale de la partie plane annulaire supérieure (102) avec un intervalle prédéterminé entre ceux-ci, et ledit boîtier inférieur (200) comprend en outre une quatrième saillie annulaire (220) qui est formée d'un seul tenant sur la surface supérieure annulaire (203) de la partie plane annulaire inférieure (202) de manière à être espacée radialement vers l'intérieur d'un intervalle prédéterminé depuis la première saillie annulaire (204), de manière à former au niveau d'une surface périphérique extérieure (226) de celle-ci une rainure annulaire intérieure inférieure (219) en coopération avec la surface périphérique intérieure (227) de la première saillie annulaire (204), et ledit boîtier supérieur (100) étant combiné audit boîtier inférieur (200) de manière que la face d'extrémité inférieure de la deuxième partie suspendue cylindrique (112) s'oppose à la surface supérieure annulaire (203) de la partie plane annulaire inférieure (202) avec un intervalle prédéterminé entre celles-ci, et la deuxième partie suspendue cylindrique (112) est disposée dans la rainure annulaire intérieure inférieure (219) de manière à chevaucher radialement la première saillie annulaire (204) et la quatrième saillie annulaire (220).

7. Palier de butée à glissière (1) selon la revendication 6, dans lequel la quatrième saillie annulaire (220) présente une surface périphérique intérieure avec un diamètre identique à celui du trou d'insertion (201) dans la partie centrale de la partie plane annulaire inférieure (202).

8. Palier de butée à glissière (1) selon la revendication 6, dans lequel ledit boîtier supérieur (100) comprend en outre une troisième partie suspendue cylindrique (118) qui est formée d'un seul tenant sur la surface inférieure annulaire (103) de la partie plane annulaire supérieure (102) et présente une surface périphérique intérieure avec un diamètre identique à celui du trou circulaire (101) dans la partie centrale de la partie plane annulaire supérieure (102) de manière à former au niveau d'une surface périphérique extérieure (115) de celle-ci une rainure annulaire intérieure supérieure (117) en coopération avec une surface périphérique intérieure (116) de la deuxième partie suspendue cylindrique (112), et la quatrième saillie annulaire (220) est formée d'un seul tenant sur la surface supérieure annulaire (203) de la partie plane annulaire inférieure (202) de manière à être espacée radialement vers l'extérieur d'un intervalle prédéterminé depuis le trou d'insertion (201) dans la partie centrale de la partie plane annulaire inférieure (202), et ledit boîtier supérieur (100) étant combiné audit boîtier inférieur (200) de manière qu'une face d'extrémité inférieure de la troisième partie suspendue cylindrique (118) s'oppose à la surface supérieure annulaire (203) de la partie plane annulaire inférieure (202) avec un intervalle prédéterminé entre celles-ci, et la troisième partie suspendue cylindrique (118) chevauchant radialement la quatrième saillie annulaire (220) et de manière qu'une face d'extrémité supérieure de la quatrième saillie annulaire (220) s'oppose à la surface inférieure annulaire (103) de la partie plane annulaire supérieure (102) avec un intervalle prédéterminé entre celles-ci, et la quatrième saillie annulaire (220) est disposée dans la rainure annulaire intérieure supérieure (117) pour amener la quatrième saillie annulaire (220) à chevaucher radialement la deuxième partie suspendue cylindrique (112) et la troisième partie suspendue cylindrique (118).

9. Palier de butée à glissière (1) selon l'une quelconque des revendications 2 à 8, dans lequel ledit boîtier inférieur (200) comprend en outre une partie cylindrique creuse (213) qui est formée d'un seul tenant sur une surface inférieure annulaire (212) de la partie plane annulaire inférieure (202) et présente une surface périphérique intérieure avec un diamètre identique au trou d'insertion (201) dans la partie centrale.

10. Palier de butée à glissière (1) selon la revendication 2, dans lequel ledit boîtier supérieur (100) comprend en outre une partie cylindrique creuse (119) qui est formée d'un seul tenant sur la surface inférieure annulaire (103) de la partie plane annulaire supérieure (102) et présente une surface périphérique intérieure avec un diamètre identique au trou circulaire (101) dans la partie centrale de la partie plane annulaire supérieure (102), et ledit boîtier inférieur (200) comprend en outre une partie cylindrique creuse (223) qui est formée d'un seul tenant sur la surface inférieure annulaire (212) de la partie plane annulaire inférieure (202) et présente une surface périphérique intérieure (226) avec un diamètre identique au trou d'insertion (201), et dans lequel ledit boîtier supérieur (100) est combiné audit boîtier inférieur (200) de manière qu'une surface périphérique extérieure (120) de la partie cylindrique creuse (119) est amenée en contact coulissant avec la surface périphérique intérieure (226) de la partie cylindrique creuse (223) dudit boîtier inférieur (200).

11. Palier de butée à glissière (1) selon l'une quelconque des revendications 2 à 10, dans lequel la partie plane annulaire supérieure (102) présente une surface supérieure annulaire (125) qui présente une surface plate en forme de courroie circulaire (126) avec une largeur prédéterminée dans une direction radialement vers l'extérieur depuis le bord périphérique extérieur du trou circulaire (101) dans la partie centrale et une surface tronconique (128) inclinée vers le bas depuis un bord périphérique extérieur de la surface plate en forme de courroie circulaire (126) vers une surface périphérique extérieure cylindrique (127) de la partie suspendue de mise en prise cylindrique (104).

12. Palier de butée à glissière (1) selon l'une quelconque des revendications 2 à 10, dans lequel la partie plane annulaire supérieure (102) présente une surface supérieure annulaire (125), et ledit boîtier supérieur (100) comprend en outre une partie saillante en forme de courroie circulaire (129) qui fait saillie d'un seul tenant axialement vers le haut depuis la surface supérieure annulaire (125).

13. Palier de butée à glissière (1) selon la revendication 12, dans lequel la surface supérieure annulaire (125) présente une surface tronconique (128) inclinée vers le bas depuis une extrémité inférieure axiale d'une surface périphérique extérieure de la partie saillante en forme de courroie circulaire (129) vers une surface périphérique extérieure cylindrique (127) de la partie suspendue de mise en prise cylindrique (104).
